(19) Europäisches Patentamt
European Patent Office
Office européen des brevets

(11) **EP 1 399 715 B1**

(12) **EUROPÄISCHE PATENTSCHRIFT**

(45) Veröffentlichungstag und Bekanntmachung des Hinweises auf die Patenterteilung:
**22.11.2006 Patentblatt 2006/47**

(21) Anmeldenummer: **02780914.4**

(22) Anmeldetag: **27.06.2002**

(51) Int Cl.:
***G01D 5/244*** *(2006.01)*

(86) Internationale Anmeldenummer:
**PCT/EP2002/007136**

(87) Internationale Veröffentlichungsnummer:
**WO 2003/002950 (09.01.2003 Gazette 2003/02)**

(54) **VERFAHREN UND VORRICHTUNG ZUM VORBEREITEN EINES SENSORSIGNALS EINES POSITIONSSENSORS FÜR EINE ÜBERTRAGUNG ZU EINER AUSWERTEEINHEIT**

METHOD AND DEVICE FOR PREPARING A SENSOR SIGNAL OF A POSITION SENSOR FOR TRANSMISSION TO AN EVALUATION UNIT

PROCEDE ET DISPOSITIF PERMETTANT DE PREPARER UN SIGNAL D'UN CAPTEUR DE POSITION EN VUE DE SA TRANSMISSION A UNE UNITE D'EVALUATION

(84) Benannte Vertragsstaaten:
**AT BE CH CY DE DK ES FI FR GB GR IE IT LI LU MC NL PT SE TR**

(30) Priorität: **27.06.2001 DE 10130838**
**07.08.2001 DE 10138640**

(43) Veröffentlichungstag der Anmeldung:
**24.03.2004 Patentblatt 2004/13**

(73) Patentinhaber: **Fraunhofer-Gesellschaft zur Förderung der angewandten Forschung e.V.**
**80686 München (DE)**

(72) Erfinder: **HERZER, Elmar**
**90431 Nürnberg (DE)**

(74) Vertreter: **Schoppe, Fritz**
**Patentanwälte**
**Schoppe, Zimmermann, Stöckeler & Zinkler**
**Postfach 246**
**82043 Pullach bei München (DE)**

(56) Entgegenhaltungen:
**EP-A- 0 872 714         EP-A- 1 052 481**
**DE-C- 10 052 152**

- **PATENT ABSTRACTS OF JAPAN vol. 014, no. 309 (P-1071), 4. Juli 1990 (1990-07-04) -& JP 02 099826 A (MATSUSHITA ELECTRIC IND CO LTD), 11. April 1990 (1990-04-11) in der Anmeldung erwähnt**

**Beschreibung**

Die vorliegende Erfindung bezieht sich auf Positionssensoren, die einen Maßstab mit einer mechanischen Periode aufweisen und Sensorsignale mit einer Periode ausgeben, die von der mechanischen Periode abhängt, wie z.B. einen Lineardiffertialtransformator (LVDT = Linear Variable Differential Transformer) oder einen Drehdifferentialtransformator (RVDT = Rotational Variable Differential Transformer), und insbesondere auf die Vorbereitung eines solchen Sensorsignals eines Positionssensors zur Ausgabe an eine entsprechende Auswerteeinheit.

Ein Beispiel für Positionssensoren, die einen mechanischen Maßstab verwenden, um eine Weg- oder Winkelmessung durchzuführen, bilden Lineardifferentialtransformatoren oder Drehdifferentialtransformatoren, die im folgenden als Resolver bezeichnet werden, oder spezielle Anordnungen magnetoresistiver Widerstände oder Hallsensoren, die zur Messung eines Weges oder eines Drehwinkels $\alpha$ bei mechanischen Anordnungen oder Maschinen verwendet werden. Diese Sensoren liefern zwei Ausgangssignale, die in Abhängigkeit der mechanischen Position variieren, so dass aus den Signalen die Position in Bezug auf einen Periodenabschnitt des mechanischen Maßstabs eindeutig bestimmbar ist.

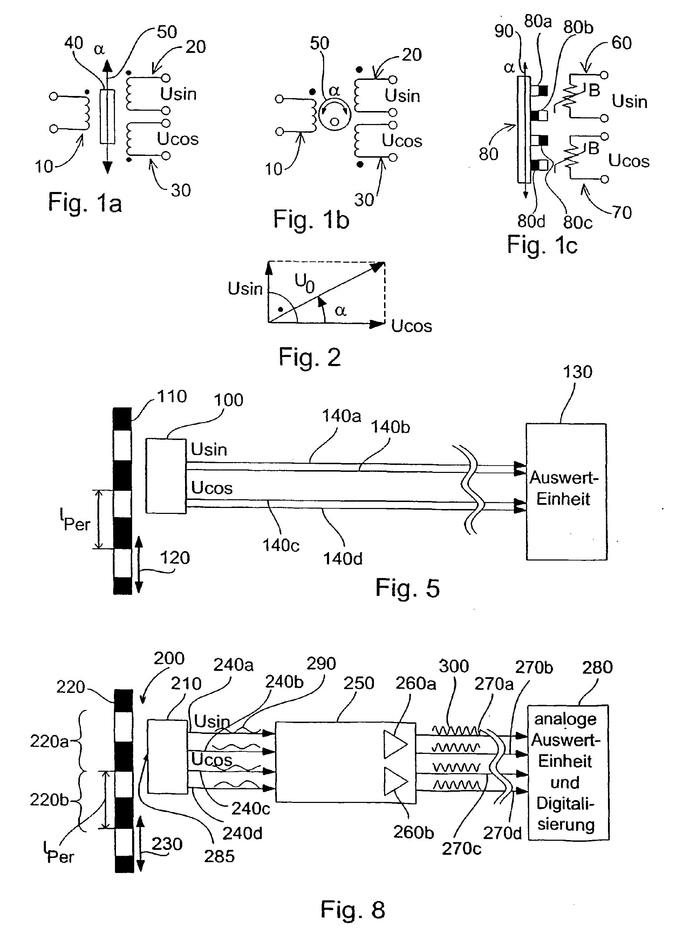

Fig. 1a und Fig. 1c zeigen beispielsweise zwei verschiedene Anordnungen zur Messung der linearen Position, während Fig. 1b eine Anordnung zur Messung eines Drehwinkels zeigt. Die Fig. 1a zeigt eine Erregerspule 10 und zwei Messspulen 20 und 30 und einen Messgegenstand 40 mit geeigneten Materialeigenschaften, wie z.B. einer geeigneten magnetischen Suszeptibilität, der zwischen der Erregerspule 10 auf der einen Seite und den Messspulen 20 und 30 auf der anderen Seite angeordnet ist, und entlang einer Achse 50 linear bewegbar ist. Die Anordnung ist derart gestaltet, dass eine lineare Verschiebung des Messgegenstands 40 oder der Erregerspule 10 eine Änderung der Kopplungsverhältnisse zwischen der Erregerspule 10 und der Messspule 20 sowie zwischen der Erregerspule 10 und der Messspule 30 bewirkt. Eine Erregerspannung an der Erregerspule 10 bewirkt deshalb Signale an den Messspulen 20 und 30, die in Quadratur zueinander stehen. Die Position des Messgegenstands 40 ist als ein Winkel $\alpha$ definierbar, der das Verhältnis zwischen den beiden Messsignalen bestimmt, wie es im folgenden erläutert werden wird.

Die in Fig. 1b gezeigte Anordnung entspricht der in Fig. 1a gezeigten Anordnung bis auf den Messgegenstand 40. In diesem Fall ist der Messgegenstand durch einen drehbaren Körper 50 gebildet. Durch Drehen der Körpers 50 ändert sich wie bei der Anordnung in Fig. 1a das Verhältnis zwischen den in den Messspulen 20 und 30 erfassten Messsignalen in Abhängigkeit von dem Drehwinkel $\alpha$, wodurch der Drehwinkel $\alpha$ bestimmt werden kann.

Die Fig. 1c zeigt eine zu Fig. 1a alternative Anordnung mit magnetoresistiven Sensoren 60 und 70, wobei als linear verschiebbarer Messgegenstand ein magnetischer Maßstab 80 dient. Der magnetische Maßstab 80 weist zwei geeignet ausgerichtete magnetische Bereiche auf, die jeweils entgegengesetzte Magnetfelder am Ort der magneto-re-sistiven Sensoren 60 und 70 erzeugen, wobei diese Bereiche in Fig. 1c durch vier in abwechselnder Richtung ausgerichtete Stabmagnete 80a, 80b, 80c und 80d dargestellt sind. Durch Verschieben des Maßstabs 80 entlang einer Achse 90 ändert sich das magnetische Feld am Ort der magnetoresistiven Sensoren 60 und 70 und somit der elektrische Widerstand derart, dass an den Sensoren 60 und 70 Signale gemessen werden, die in Quadratur zueinander stehen.

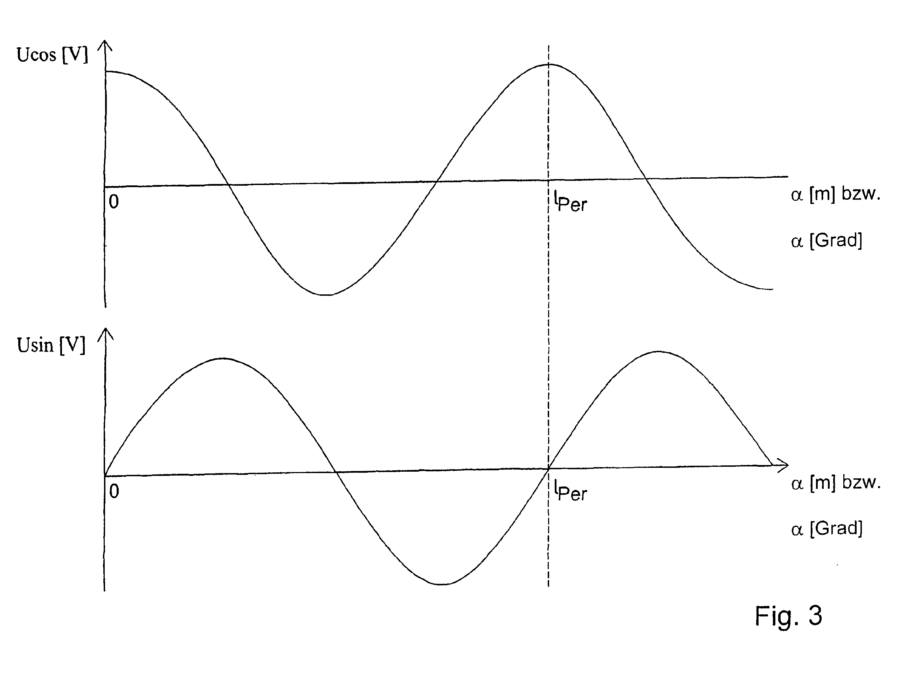

Folglich zeichnet sich die Variation der Signale zunächst dadurch aus, dass dieselben im wesentlichen in Quadratur zueinander stehen. Fig. 2 zeigt den Zusammenhang zwischen dem Wert $\alpha$ einerseits und den Messsignalen an der Spule 20 und an der Messspule 30 andererseits in Abhängigkeit von einer Erregungsspannung $U_0$ für den in Fig. 1b gezeigten Messaufbau, wobei der Zusammenhang aber im wesentlichen auch auf den in Fig. 1c und Fig. 1a gezeigten Aufbau zutrifft.

Wie es aus Fig. 2 hervorgeht, können die in Bezug auf die mechanische Periode $l_{PER}$ des mechanischen Maßstabs definierten periodischen Signale Usin und Ucos durch folgende Gleichungen beschrieben werden:

$$\text{Usin} = U_0 \, sin\left(\frac{2\pi\alpha}{l_{PER}}\right) \qquad\qquad \text{Gl. 1}$$

$$\text{Ucos} = U_0 \, cos\left(\frac{2\pi\alpha}{l_{PER}}\right) \qquad\qquad \text{Gl. 2}$$

wobei $U_0$ eine Gleich- oder Wechselspannung bzw. ein Gleich- oder Wechselstrom sein kann, wie z.B. $U_0$ = Upp cos ($\omega$t), wobei Upp die Amplitude der Wechselspannung $U_0$ ist.

Fig. 3 zeigt die Signalverläufe der Messsignale Usin und Ucos der Sensoren von Fig. 1b und 1c in Abhängigkeit von dem Winkel $\alpha$ bzw. der linearen Verschiebung $\alpha$. Wie zu sehen ist, zeichnet sich die Variation dieser Signale dadurch aus, dass sie in Quadratur zueinander stehen, d.h. sich zueinander wie Cosinus und Sinus verhalten, und dass die Signale Ucos und Usin periodisch sind und eine Periode aufweisen, die der mechanischen Periode $l_{PER}$ des mechanischen Maßstabs entspricht. In dem Fall von Fig. 1b beträgt die mechanische Periode $l_{PER}$ beispielsweise eine volle Umdrehung, d.h. 360°, und in dem Fall von Fig. 1c ist dieselbe gleich dem Abstand zweier jeweils gleichsinnig gerichteter Magnete. Anders ausgedrückt weisen die Signale Usin und Ucos nur innerhalb einer Periode $l_{PER}$ einen eindeutigen Zusammenhang zu der Messgröße $\alpha$ auf und wiederholen sich periodisch bei Durchlaufen mehrerer Periodenabschnitte der Länge $l_{PER}$, wie z.B. bei zwei Umdrehungen.

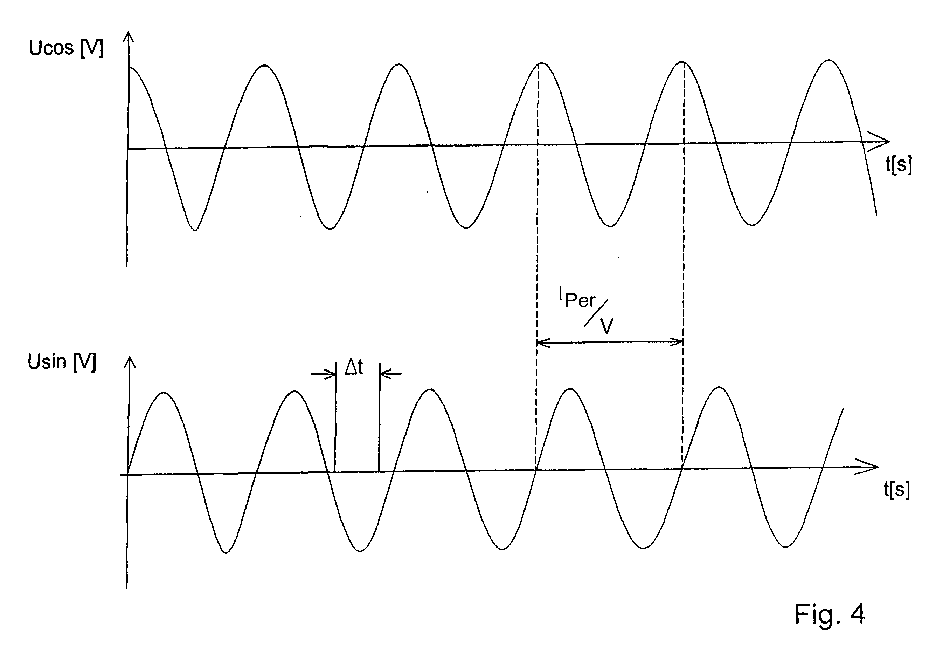

In Fig. 4 sind beispielsweise die Sensorsignale Ucos und Usin exemplarisch für den Fall einer konstanten Dreh- oder Translationsbewegung gegen die Zeit t aufgetragen. Wie es zu sehen ist, sind die Signale Usin und Ucos periodische Signale, die in aufeinanderfolgenden Perioden den Wertebereich der in Fig. 3 gezeigten Signalverläufe durchlaufen. Die Zeitperiodenlänge der Signale Ucos und Usin ergibt sich zu dem Quotienten aus der mechanischen Periode $l_{PER}$ und der linearen Geschwindigkeit bzw. Winkelgeschwindigkeit v. Nach einer Zeitdauer von $l_{PER}$/v hat die relative Drehung bzw. Verschiebung des Maßstabs zu dem Positionssensor eine mechanische Periode $l_{PER}$ zurückgelegt. Bei einer nicht-konstanten Drehung bzw. Verfahrgeschwindigkeit ergeben sich ebenfalls periodische Signale, die jedoch keine konstante Periode sondern eine sich ändernde Periode aufweisen.

Da fast alle Steuerungen und Regelungen mechanischer Systeme in zunehmendem Masse digital realisiert werden, müssen die Ausgangssignale Usin und Ucos der Sensoren zumeist digitalisiert werden. Zur Ermittlung eines digitalen Äquivalenz $\alpha_{DIG}$ der Position $\alpha$ muss das Verhältnis von Usin zu Ucos ausgewertet werden, wobei im allgemeinen folgende Beziehung gilt:

$$\alpha_{DIG} = arctan \frac{Usin}{Ucos} \qquad\qquad\qquad Gl.\ 3$$

Unter den Auswerteverfahren gibt es solche, die beide Spannungen Usin und Ucos gemeinsam digitalisieren und daraufhin die Berechnung des Arkustangens digital vornehmen, und solche, die beide Spannungen Usin und Ucos gleichzeitig digitalisieren und hierbei unmittelbar den digitalen Wert $\alpha_{DIG}$ bilden.

Um die Sensorsignale, wie sie von einem der Sensoren in Fig. 1a-1c erzeugt werden, und wie sie exemplarisch in Fig. 4 gezeigt sind, zu einer Auswerteeinheit zu übertragen, wo dieselben ausgewertet, wie z.B. digitalisiert, werden, werden herkömmlicher Weise die in den Fig. 5, 6 und 7 dargestellten Lösungen zum Anschluss des Positionssensors an eine Auswerteeinheit verwendet. Bei der folgenden Beschreibung der Fig. 5 bis 7 wird darauf hingewiesen, dass identische Elemente in den Zeichnungen mit denselben Bezugszeichen versehen werden, und dass eine wiederholte Beschreibung dieser identischen Elemente weggelassen wird.

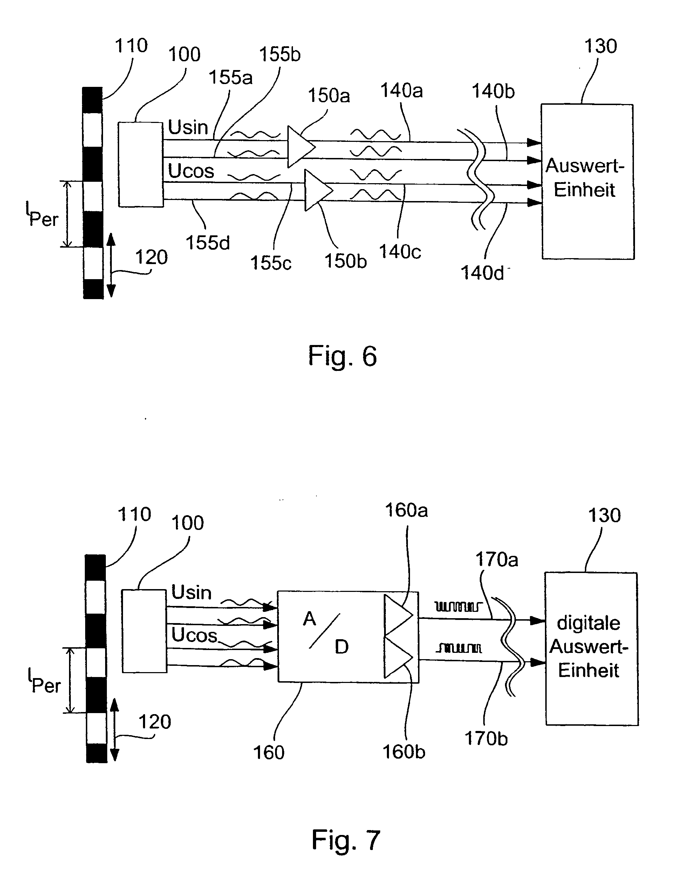

Fig. 5 bis 7 zeigen jeweils einen Positionssensor 100, der mittels eines Maßstabs 110 mit einer mechanischen Periode $l_{PER}$ eine relative lineare Verschiebung 120 des Maßstabs 110 in Relation zu dem Positionssensor 100 oder eine Verschiebung des Positionssensors 100 in Relation zum Maßstab 110 erfasst. In dem Fall von Fig. 5 ist der Positionssensor direkt an eine Auswerteeinheit 130 angeschlossen. Hierzu ist der Positionssensor 100 über vier Übertragungsleitungen 140a, 140b, 140c und 140d mit der Auswerteeinheit 130 verbunden, um das Sensorsignal Usin und das Sensorsignal Ucos differentiell an die Auswerteeinheit 130 zu übertragen.

Um die aufgrund der Länge der Übertragungsleitungen 140a-140d auftretenden Übertragungsfehler bei der Übertragung von dem Positionssensor 100 zu der Auswerteeinheit 130 zu verringern, sind bei der in Fig. 6 gezeigten Lösung zur Übertragung der Sensorsignale vor die Übertragungsleitungen 140a-140d analoge Leitungstreiber 150a und 150b geschaltet, die mit dem Sensor 100 über Leitungen 155a, 155b, 155c und 155d verbunden sind und durch eine Verstärkung bzw. Vorbereitung der Sensorsignale Usin und Ucos des Positionssensors 100 eine sicherere Übertragung gewährleisten.

Die in Fig. 7 gezeigte Lösung zur Übertragung der Sensorsignale des Positionssensors 100 zu der Auswerteeinheit 130 erhöht die Sicherheit der Übertragung dieser Signale durch eine Vorbereitung bzw. Digitalisierung derselben vor der eigentlichen Übertragung zu der Auswerteeinheit 130. Zur Digitalisierung ist ein Analog/Digital-Wandler 160 mit dem Positionssensor 100 verbunden, um die differentiell eingespeisten analogen Sensorsignale Usin und Ucos zu empfangen, dieselben zu digitalisieren und in digitalisierter Form mittels Leistungstreibern 160a und 160b an einer Ausgangsstufe desselben zu verstärken und in digitaler und verstärkter Form auf Übertragungsleitungen 170a und 170b an die Auswerteeinheit 130 auszugeben. Im Gegensatz zu den Übertragungen gemäß Fig. 5 und 6 werden die Sensorsignale Usin und Ucos nicht erst in der Auswerteeinheit 130 sondern direkt bei dem Positionssensor 100 durch den Analog/Digital-Wandler 160 digitalisiert. Die digitale Auswerteeinheit 130 kann die im vorhergehenden erwähnte Berechnung des Arkustangens basierend auf den digitalen Sensorsignalen durchführen.

Die Auswertung der Sensorsignale Usin und Ucos ist weitestgehend unabhängig von der Variation der Erregerspannung $U_0$, was bedeutet, dass Störungen, die auf beiden Signalen bzw. an beiden Leitungspaaren 140a, 140b bzw. 140c und 140d bzw. beiden Leitungen 170a und 170b gleichermaßen auftreten, im wesentlichen keine Auswirkung auf das Auswerteergebnis haben. Störungen, die aber nur einem der beiden Sensorsignale Usin und Ucos überlagert sind, wirken sich unmittelbar auf das Messergebnis aus. Um ein möglichst genaues Ergebnis zu erhalten, ist es deshalb wünschenswert, eine möglichst kleine mechanische Periode $l_{PER}$ zu verwenden, um den Quotienten aus den Sensorsignalen Usin und Ucos möglichst ungenau bestimmen und bei einer bestimmten Auflösung nur noch wenige Punkte einer Periode auswerten zu müssen, so daß sich unsymmetrische Störungen möglichst wenig auf die Auswertung auswirken. Ein Extremfall besteht in der Abtastung der Nulldurchgänge und Maxima beider Sensorsignale. Bei der digitalen Darstellung der Sensorsignale mit jeweils einem Bit entsteht das in der industriellen Steuerungstechnik verbreitete Inkrementsignal.

Dem Wunsch nach einer möglichst kleinen mechanischen Periode, um gegen asymmetrische Störungen der zueinander in Quadratur stehenden Signale entgegenzuwirken, stehen jedoch einige Probleme entgegen. Zum einen ist es fertigungstechnisch und mechanisch nicht immer möglich, die Maßstäbe ausreichend klein herzustellen, anzubringen oder abzulesen. Zum anderen werden die Sensorsignale des Positionssensors 100 bei hoher Dreh- bzw. Fahrgeschwindigkeit sehr hochfrequent. In Fig. 4, in der exemplarische Sensorsignale Ucos und Usin für den Fall einer konstanten Dreh- oder Translationsbewegung gegen die Zeit t aufgetragen sind, ist beispielsweise die Abtastzeit $\Delta t$ zwischen zwei Abtastungen in der Auswerteeinheit dargestellt. In Hinblick auf eine maximale Verfahr- bzw. Drehgeschwindigkeit ist die Auswertbarkeit der Sensorsignale Ucos und Usin folglich durch die Bandbreite und die Abtastgeschwindigkeit $\Delta t$ der Auswerteelektronik bzw. der Auswerteeinheit beschränkt, so dass beispielsweise $\Delta t \leq \frac{1}{2} l_{PER}/v$ gelten muss. Eine untere Schranke für die mechanische Periode ergibt sich ferner daraus, dass höherfrequente Signale in dem Bereich von mehreren Megahertz in den Übertragungsleitungen nicht mehr verlustarm übertragen werden können. Zu den von außen eingestreuten Störungen kommt noch die durch die Leitungsverluste hervorgerufene Verzerrung der Signale.

Unter Berücksichtigung der Bandbreite und Abtastgeschwindigkeit der Auswerteelektronik sowie der Übertragungsverluste der Sensorsignale ergibt sich für einen bestimmten Anwendungsfall, der durch eine bestimmte gewünschte Auflösung von $\alpha_{DIG}$, die maximal auftretende Verfahr- bzw. Drehgeschwindigkeit, die Länge der Übertragungsstrecke, über die die Sensorsignale zur Auswerteeinheit übertragen werden müssen, und die Größe der eingestreuten Störungen entlang der Übertragungsstrecke charakterisiert ist, eine mechanische Periode für den Positionssensor, die Sensorsignale erzeugt, die optimal übertragen und ausgewertet werden können, wobei diese mechanische Periode im folgenden als eine elektrisch optimale Periode bezeichnet wird.

Auf der anderen Seite existiert jedoch eine mechanische Periode, die wegen der Herstellung, Anbringung und Ablesbarkeit unter mechanischen Gegebenheiten optimal wäre, und die meist größer ist als die elektrisch optimale Periode und im folgenden als mechanisch optimale Periode bezeichnet wird. Bei großer Verfahrgeschwindigkeit ist es aber ebenso möglich, dass der Sensor sehr schnell bewegt wird, und dass die aus mechanischen Gesichtspunkten optimale mechanische Periode kleiner als die elektrische optimale Periode ist.

Abweichungen der mechanisch optimalen zu der elektrisch optimalen Periode treten vor allem beim Wechsel eines Positionssensors eines bestehenden Maschinensteuerungssystems auf. Wird beispielsweise ein genauerer bzw. höher auflösender und nach einem anderen Prinzip arbeitender Sensor in einem vorhandenen Maschinensteuerungssystem eingesetzt, so ändert sich auch die Periode des Ausgangssignals und ist nicht mehr auf die optimale eingestellt.

Die DE 19815438A1 betrifft eine Positionsmeßeinrichtung und ein Verfahren zum Betrieb einer Positionsmeßeinrichtung. Insbesondere wird die Verwendung einer Signalperiode-Variationseinheit beschrieben, die zwischen eine Positionsmeßeinrichtung und eine Auswerteeinheit geschaltet ist, um die Signalfrequenzen periodisch modulierter, analoger Inkrementsignale von der Positionseinrichtung zu erhöhen bzw. die geometrische Periode virtuell zu verringern. Ein Ausführungsbeispiel der Signalperiode-Variationseinheit besteht aus zwei Interpolationseinrichtungen, die die von der Positionseinrichtung ausgegebenen um 90 Grad phasenversetzten analogen Inkrementsignale empfangen, um Digitalworte auszugeben, die einen Positionswert anzeigen, einer Umrechnungstabelle, welche mittels der Digitalworte bzw. des Positionswertes auf eine Mehrzahl von Umrechnungstabellen zugreift, in denen jedem Positionswert aus den Digitalwörtern ein bestimmter veränderter Positionswert zugeordnet wird, so daß jeweils ein sinus- bzw. cosinusförmiger Signalverlauf mit vergrößerter Signalperiode resultiert, und zwei D/A-Wandlern, die aus den ausgelesenen Tabelleneinträgen quasi-analoge sinus- und cosinusförmige Inkrementsignale erzeugen, die dann an die Auswerteeinheit ausgegeben werden. Bei einem weiteren Ausführungsbeispiel werden anstatt zweier den augenblicklichen Positionswert anzeigender Digitalworte durch eine Interpolationseinheit und eine Richtungserkennungseinheit aus den analogen Signalen ein gepulstes Digitalsignal und ein richtungsangebendes Richtungssignal erzeugt. Diese Signale werden einer Adreßzählereinheit 24 zugeführt, die je nach gewünschtem Signalperiodenvariationsfaktor in einer Umrechnungstabelle und einer Umrechnungstabelle um eine vorbestimmte Anzahl von Einträgen mit einem Adreßzeiger 34A bzw. 34B vorrückt, wobei in den Umrechnungstabellen in digitaler Form Signalamplitudenwerte einer Sinus- bzw. Cosinusfunktion gespeichert sind. Durch Vergrößern der Schrittweite beim Vorrücken innerhalb der Tabellen 21A und 21B kann die simulierte Signalperiode schrittweise verstellt werden.

Die EP 0463561B1 und die US 5347355 beschreiben ein Signalverarbeitungsverfahren und eine Signalverarbeitungsvorrichtung sowie ein System, wie z.B. eine Verschiebungserfassungsvorrichtung, die dieselben verwendet. Aus den Sinus- und Cosinussignalen S1 und C1 einer Verschiebungserfassungsvorrichtung werden durch die geeignete Verwendung von Addierern, Multiplizierern usw., d.h. durch eine analoge Verschaltung, Sinus- und Cosinussignale erzeugt, welche eine um ein ganzzahliges Vielfaches größere Signalfrequenz aufweisen. Eingebaut ist die Schaltung zur Frequenzverdopplung in eine Verarbeitungsschaltung, die eingangsseitig die um 90 Grad phasenversetzten sinus- und cosinusförmigen Signale in Frequenz verdoppelt und anschließend durch Nulldurchgangsanalyse in Teilungspulse umwandelt, die an Zahl der Verschiebung zwischen einer Optik 101, 102, 104-107 und einem Beugungsgitter 103 entsprechen.

Die JP 02099826A beschreibt eine Vorrichtung zur Verarbeitung eines Signals eines Codierers, bei der Erfassungssignale mit Phasen von 0 und 90 Grad, die von Detektoren ausgegeben werden, zunächst in Pulssignale umgewandelt und dann in einem Inkremental/Dekremental-Zähler in Binärcodesignale umgewandelt werden. Durch Herausnehmen von Binärcodesignalen wahlweiser Wertigkeit in Datenauswähleinheiten werden Pulssignale a bzw. b erhalten, die verschiedenen Frequenzteilungen der Erfassungssignale entsprechen. Insbesondere ist die durch die Herausnahme der sich langsamer ändernden Binärcodesignale erhaltene Pulsfrequenz des Signals a um den Faktor 2 geringer als die des Signals b, das durch die sich mit höherer Frequenz ändernden Binärcodesignale erhalten wird, von denen sich das niedrigstwertige mit gleicher Frequenz ändert, wie das Signal b. Ein zu dem Pulssignal b um 90 Grad phasenversetztes Pulssignal c mit gleicher, d.h. halbierter, Frequenz wie das Signal a wird durch XOR-Verknüpfung des Signals a mit dem Signal b erzielt. Die so erzeugten Signale a und c führen auch bei Verwendung einer Steuerschaltung mit geringer Signalverarbeitungsgeschwindigkeit zu einer hohen Präzision.

Die Aufgabe der vorliegenden Erfindung besteht darin, ein Verfahren und eine Vorrichtung zum Vorbereiten eines Signals eines Positionssensors für eine Übertragung zu einer Auswerteeinheit zu schaffen, so dass das Zusammenwirken zwischen Positionssensoren und Auswerteeinheiten verbessert und/oder unaufwendiger wird.

Diese Aufgabe wird durch ein Verfahren gemäß Anspruch 1 oder 2 und eine Vorrichtung gemäß Anspruch 3 oder 4 gelöst.

Der vorliegenden Erfindung liegt die Erkenntnis zugrunde, dass die Auswertung der Sensorsignale eines Positionssensors mit einer mechanischen Periode oder allgemein das Zusammenwirken zwischen Positionssensoren und Auswerteeinheiten dadurch verbessert werden kann, daß das Auseinanderklaffen zwischen der elektrisch optimalen Periode und der in mechanischer Hinsicht optimalen Periode beseitigt wird. Erfindungsgemäß wird dies dadurch erzielt, daß das Sensorsignal eines Positionssensors, das eine Periode aufweist, die von der mechanischen Periode des Maßstabs des Positionssensors abhängt, vor bzw. für die Ausgabe bzw. Übertragung zu einer Auswerteeinheit in ein übersetztes Signal-übersetzt wird, das eine Periode aufweist, die einer zweiten, beispielsweise auf die elektrisch optimale Periode eingestellten, mechanischen Periode entspricht. Obwohl hierdurch zunächst der Aufwand zur Signalaufbereitung vor der eigentlichen Auswertung erhöht wird, wird es durch die Periodenumsetzung ermöglicht, Positionssensoren, die bisher aufgrund ihrer ungünstigen Signale bzw. ihrer ungünstigen mechanischen Periode nicht oder nur unter Erhöhung der auftretenden Signalfehler in Verbindung mit einer vorhandenen Steuerung bzw. Auswerteeinheit eingesetzt werden konnten, geeignet zu adaptieren, oder eine ansonsten nicht herstellbare, anbringbare oder ablesbare elektrisch optimale Periode in Vorbereitung auf die Auswertung durch eine Auswerteeinheit "zu simulieren", wodurch sowohl Übertragungsfehler minimiert als auch die Auswertbarkeit verbessert werden können und zugleich eine aufwendige mechanische Abstimmung des Maßstabs des Positionssensors in Bezug auf die Auswerteeinheit vermieden wird.

Zur Übersetzung des Sensorsignals in ein übersetztes Signal mit einer Periode, die einer anderen mechanischen Periode als derjenigen des Positionssensors entspricht, kann aus dem Sensorsignal zunächst ein absoluter Positionswert bestimmt werden, der eine Position auf den Maßstab in Bezug auf einen Abschnitt des Maßstabs anzeigt, der zumindest einen momentanen Periodenabschnitt des mechanischen Maßstabs des Positionssensors als auch einen momentanen Periodenabschnitt eines durch die simulierte mechanische Periode definierten Maßstabs enthält, woraufhin das übersetzte Signal aus dem absoluten Positionswert erzeugt wird.

In dem Fall, dass die elektrisch optimale Periode beispielsweise größer als die mechanische Periode des Positionssensors ist, kann die zweite mechanische Periode, in Bezug auf welche das übersetzte Signal definiert ist, beispielsweise auf einen ganzzahligen Bruchteil der mechanischen Periode des Positionssensors eingestellt sein, und der Abschnitt des Maßstabes zur Bestimmung des absoluten Positionswerts entspricht dem momentanen Periodenabschnitt der Folge von Periodenabschnitten des Maßstabs. Um beispielsweise eine Periodenumsetzung der Sensorsignalperiode, die von der mechanischen Periode des Positionssensors abhängt, auf eine Periode zu erzielen, die einer mechanischen Periode entspricht, die l/K der Sensorperiode beträgt mit ganzzahligem K größer 0, kann beispielsweise ein Analog/Digital-Wandler verwendet werden, um das Sensorsignal des Positionssensors in einen digitalen Wert $D_B$ umzuwandeln, um den absoluten Positionswert $D_B$ in digitaler Form zu erhalten. Anschließend kann durch ein einfaches Rechenwerk der mit K multiplizierte Rest der Division des digitalen absoluten Positionswertes $D_B$ durch K, d.h. $K \cdot (D_B \bmod K)$, berechnet werden, um den so erhaltenen digitalen Wert durch einen Digital/Analog-Wandler in das analoge übersetzte Signal umzuwandeln. Der Aufwand für das Rechenwerk für die Berechnung der hier beschriebenen Rechenvorschrift $K \cdot (D_B \bmod K)$ vereinfacht sich für $K=2^N$ zu Null, da in diesem Fall die Rechnung $D_B \bmod 2^N$ durch ein Ausblenden der höherwertigen N Bits durch Nichtweiterführen der entsprechenden Bitleitungen und die Multiplikation durch Umverdrahtung der niedrigwertigeren Bitleitungen auf die höherwertigen Bitleitungen ohne Aufwand realisiert werden kann. Um so beispielsweise eine Periodenumsetzung der Sensorsignalperiode, die von der mechanischen Periode des Positionssensors abhängt, auf eine Periode zu erzielen, die einer mechanischen Periode entspricht, die $2^{-N}$ der Sensorperiode beträgt mit ganzzahligem N größer 0, kann beispielsweise ein Analog/Digital-Wandler verwendet werden, um das Sensorsignal des Positionssensors in einen digitalen Wert umzuwandeln, um den absoluten Positionswert $D_B$ in digitaler Form zu erhalten. Anschließend kann man die höchstwertigen Bits des digitalen absoluten Positionswerts ausblenden und den so erhaltenen digitalen Wert durch einen Digital/Analog-Wandler in das analoge übersetzte Signal umwandeln.

Bei einem weiteren Ausführungsbeispiel weisen die zweite mechanische Periode, in Bezug auf welche das übersetzte Signal definiert sein soll, und die mechanische Periode des Positionssensors beispielweise ein kleinstes gemeinsames Vielfaches auf, wobei die zweite mechanische Periode sowohl kleiner als auch größer als die mechanische Periode des Positionssensors sein kann. Der Abschnitt des Maßstabes zur Berechnung des absoluten Positionswerts umfasst hierbei mehrere aufeinanderfolgende Periodenabschnitte. Um einen absoluten Positionswert zu erhalten, wird das Sensorsignal dahingehend überwacht, dem wievielten Periodenabschnitt innerhalb des Abschnitts des Maßstabs zur Bestimmung des absoluten Positionswerts der momentane Periodenabschnitt entspricht, in Bezug auf welchen das Sensorsignal die Position des Maßstabs angibt.

Wenn die erfindungsgemäße Vorrichtung über eine kurze Übertragungsstrecke mit dem Positionssensor verbunden ist, sind die Übertragungsverluste des Sensorsignals des Positionssensors, bis dieselben den Eingang der erfindungsgemäßen Vorrichtung erreichen, gering, auch wenn beispielsweise die mechanische Periode des Positionssensors in Hinblick auf die Herstellbarkeit, Anbringbarkeit und Ablesbarkeit des Maßstabs optimiert ist und von der elektrisch optimalen Periode abweicht, weshalb durch die vorliegende Erfindung eine signifikante Reduzierung der Übertragungsverluste erzielt werden kann.

Bevorzugte Ausführungsbeispiele der vorliegenden Erfindung werden nachfolgend Bezug nehmend auf die beiliegenden Zeichnungen näher erläutert. Es zeigen:

Fig. 1a	1b und 1c schematische Darstellungen von Sensoranordnungen zur Positionsmessung unter Erzeugung von zueinander in Quadratur stehenden Ausgangssignalen;

Fig. 2	ein Vektordiagramm zur Veranschaulichung des Zusammenhangs zwischen zueinander in Quadratur stehenden Ausgangssignalen, einem Erregersignal und einem Drehwinkel;

Fig. 3	Graphen, die die Abhängigkeit der Sensorsignale der Sensoranordnungen von Fig. 1a-1c von dem Drehwinkel bzw. dem Verfahrweg zeigen;

Fig. 4	Graphen, die exemplarische Signalverläufe der Sensorsignale der Sensoranordnungen von Fig. 1a-1c in Abhängigkeit von der Zeit für den Fall einer konstanten Dreh- bzw. Verfahrgeschwindigkeit zeigen;

Fig. 5	eine schematische Darstellung eines direkten Anschlusses eines Positionssensors an eine Auswerteeinheit;

Fig. 6	eine schematische Darstellung, bei der ein Positionssensor über Leistungstreiber an eine Auswerteeinheit angeschlossen ist;

Fig. 7	eine schematische Darstellung, bei der ein Positionssensor über einen Analog/Digital-Wandler an einer Auswerteeinheit angeschlossen ist;

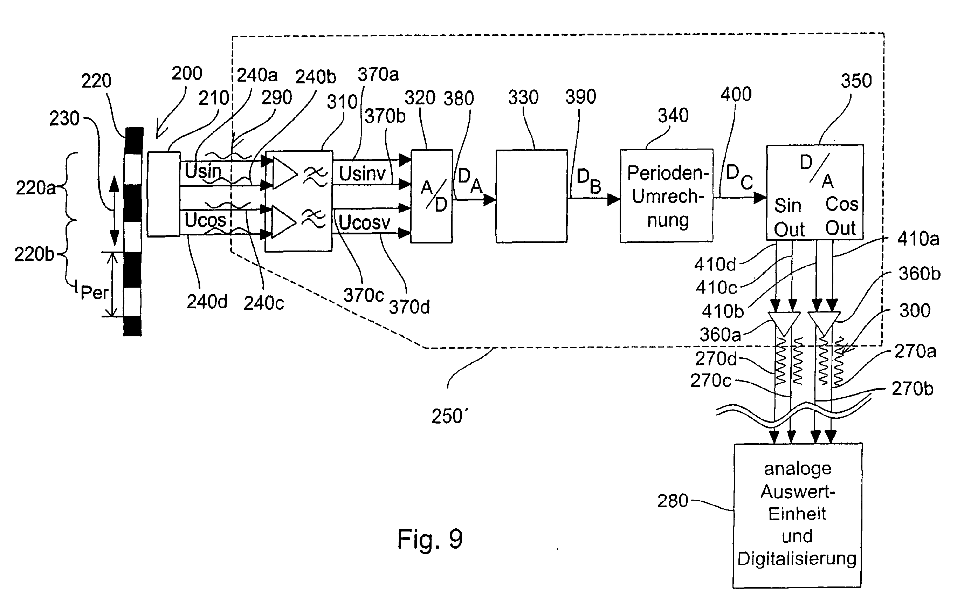

Fig. 8	eine schematische Darstellung einer Vorrichtung zum Vorbereiten der Sensorsignale eines Positionssensors für eine Ausgabe an eine Auswerteeinheit gemäß einem Ausführungsbeispiel der vorliegenden Erfindung;

Fig. 9	ein Blockdiagramm eines speziellen Ausführungsbeispiels einer Vorrichtung zum Vorbereiten der Sensorsignale eines Positionssensors für eine Ausgabe an eine Auswerteeinheit, bei dem die mechanische Periode des Positionssensors um eine Potenz von 2 größer als die mechanische Periode ist, der die Periode des übersetzten Signals entspricht;

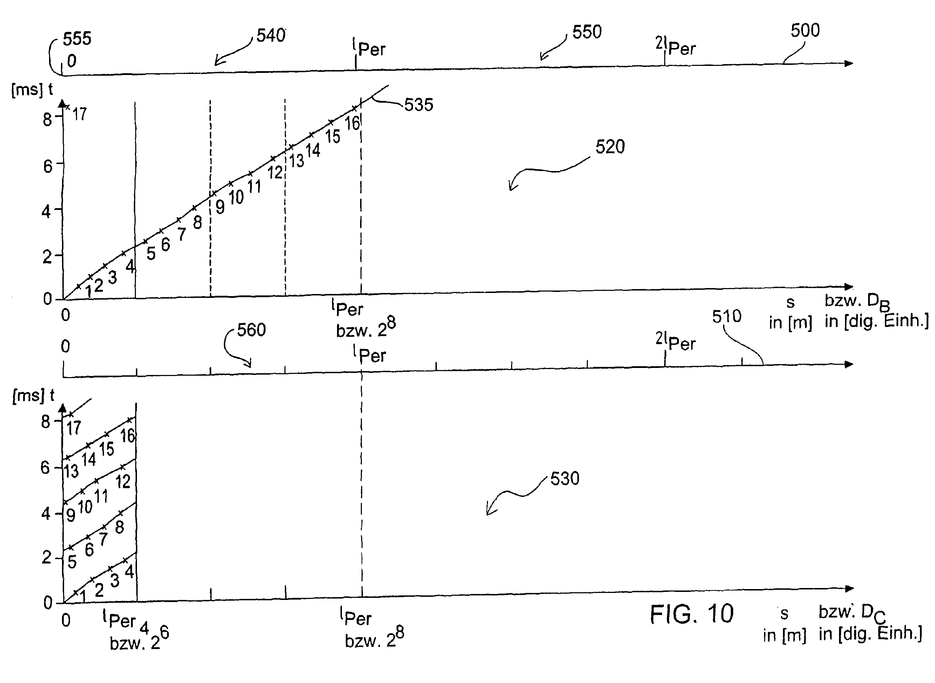

Fig. 10	eine Skizze, in der schematisch der Maßstab eines Positionssensors, der Maßstab, wie er durch die mechanische Periode des übersetzten Signals festgelegt wird, und zwei Graphen gezeigt sind, in denen exemplarisch auftretende digitale Werte bei der Vorrichtung von Fig. 9 für eine exemplarische lineare Verschiebung dargestellt sind;

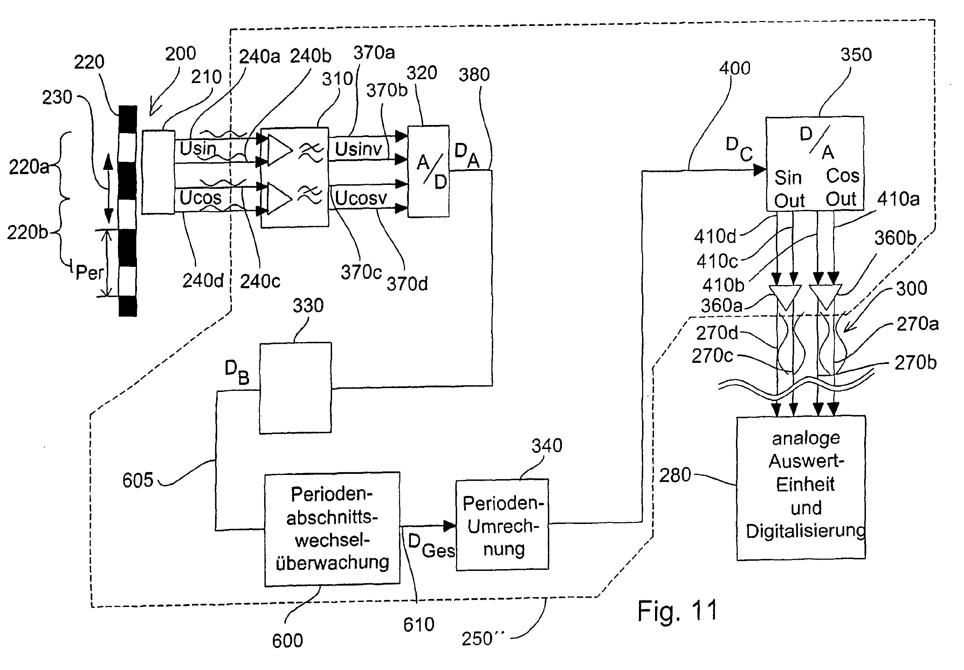

Fig. 11 ein Blockdiagramm eines speziellen Ausführungsbeispiels einer Vorrichtung zur Vorbereitung der Sensorsignale eines Positionssensors für eine Ausgabe an eine Auswerteeinheit, bei dem die mechanische Periode des Positionssensors und die mechanische Periode, der die Periode des übersetzten Signals entspricht, ein kleinstes gemeinsames ganzzahliges Vielfaches aufweisen.

Bezug nehmend auf Fig. 8 wird zunächst die vorliegende Erfindung anhand eines Ausführungsbeispiels beschrieben, bei dem ein Positionssensor an eine Auswerteeinheit angeschlossen ist, und hierzu eine Vorbereitung von Sensorsignalen des Positionssensors für eine Ausgabe an die Auswerteeinheit gemäß einem Ausführungsbeispiel der vorliegenden Erfindung verwendet wird.

Fig. 8 zeigt einen Positionssensor 200, der aus einer Sensoreinheit 210 und einem Maßstab 220 besteht. Die Sensoreinheit 210 und der Maßstab 220 sind relativ gegeneinander verschiebbar, wie es durch einen Pfeil 230 dargestellt ist. Der Maßstab 220 besteht, wie es bereits in der Beschreibungseinleitung beschrieben worden ist, beispielsweise aus einander abwechselnden magnetischen Abschnitten mit entgegengesetzter Polarisierung, die in Fig. 8 durch helle und dunkle bzw. leere und schraffierte Bereiche dargestellt sind. Der Maßstab 220 weist eine mechanische Periode auf, die durch den Abstand zweier aufeinanderfolgender Bereiche mit gleicher Polarisierung definiert ist und $l_{PER}$ beträgt. Folglich besteht der Maßstab 220 aus einer Folge von angrenzenden Periodenabschnitten 220a und 220b, die jeweils eine Länge von $l_{PER}$ aufweisen.

Der Sensor 200 bzw. die Sensoreinheit 210 ist über Leitungen 240a, 240b, 240c, 240d mit einer Periodenumsetzungseinrichtung 250 verbunden, um an dieselbe die Sensorsignale Usin und Ucos differentiell auf jeweils zwei Leitungen 240a und 240b bzw. 240c und 240d auszugeben. Die Periodenumsetzungseinrichtung 250 umfasst an einer Ausgangsstufe zwei analoge Leistungstreiber 260a und 260b und ist über gegebenenfalls lange Übertragungsleitungen 270a, 270b, 270c und 270d mit einer Auswerteeinheit 280 verbunden.

Nachdem im Vorhergehenden der Aufbau zur Übertragung der Sensorsignale von dem Sensor 200 zu der Auswerteeinheit 280 gemäß einem Ausführungsbeispiel der vorliegenden Erfindung beschrieben worden ist, wird im folgenden die Funktionsweise der Periodenumsetzungseinrichtung 250 beschrieben, die die Vorbereitung der Sensorsignale Usin und Ucos zur Ausgabe an die Auswerteeinheit 280 über die Übertragungsleitungen 270a-270d durchführt.

Wie es in der Beschreibungseinleitung erwähnt worden ist, gibt der Positionssensor 200 als Sensorsignale Usin und Ucos periodische Signale aus, die in Fig. 8 schematisch als Wellenlinien 290 dargestellt sind, und wie sie für den Fall einer konstanten Verfahr- bzw. Winkelgeschwindigkeit in Fig. 4 dargestellt sind. Die Sensorsignale Usin und Ucos weisen eine Periode auf, die von der mechanischen Periode $l_{PER}$ des Maßstabs 220 abhängt. Genauer ausgedrückt, geben die Sensorsignale Usin und Ucos eine durch den Sensor 200 erfasste Position in Bezug auf einen momentanen Periodenabschnitt 220b an, da die Sensorsignale Usin und Ucos, wie es Bezug nehmend auf Fig. 3 beschrieben worden ist, lediglich über die Länge $l_{PER}$ eines Periodenabschnitts einen eindeutigen Zusammenhang zu der erfassten Position aufweisen. Die erfasste Position entspricht in dem Fall dieses Positionssensors 200 beispielsweise einer relativen Lage des momentanen Periodenabschnitts 200b des Maßstabs 220 zu einem Referenzpunkt 285 an der Sensoreinheit 210.

Die mechanische Periode $l_{PER}$ des Maßstabs 220 ist vorzugsweise nach Gesichtspunkten der optimalen Herstellbarkeit, Anbringbarkeit und Ablesbarkeit des Maßstabs 220 ausgewählt. Um die sich ergebenden Übertragungsverluste aufgrund der gegebenenfalls höherfrequenten Anteile der Sensorsignale Usin und Ucos gering zu halten, kann die Periodenumsetzungseinrichtung 250 in der Nähe des Sensors 200 angeordnet bzw. über kurze Leitungen 240a-240d mit dem Sensor 200 verbunden sein.

Die Periodenumsetzungseinrichtung 250 übersetzt die Sensorsignale Usin und Ucos in Signale, die bezüglich einer einstellbaren oder eingestellten mechanischen Periode definiert sind, bzw. in Signale mit einer Periode, die dieser mechanischen Periode entspricht, wobei dieselbe eingestellt werden kann, um an die elektrisch optimale Periode angepasst zu sein, die in Hinblick auf die Signalauswertung durch die Auswerteeinheit 280 und in Hinblick auf die Übertragung über die Übertragungsleitungen 270a-270d optimal ist. Anders ausgedrückt simuliert die Periodenumsetzungseinrichtung 250 aus der Sicht der Auswerteeinheit 280 Sensorsignale, wie sie sich durch einen Sensor mit der eingestellten mechanischen Periode bzw. einer mechanischen Periode, die gleich der elektrisch optimalen Periode ist, ergeben hätten. Die entstehenden Signale sind in Fig. 8 schematisch mit Wellenlinien 300 angezeigt und sind periodische Signale mit einer Periode, die von der eingestellten mechanischen Periode abhängt.

In Fig. 8 ist exemplarisch der Fall dargestellt, dass die elektrisch optimale Periode kleiner als die mechanische Periode des Maßstabs 220 ist, weshalb die Periode der Sensorsignale 290 größer als diejenige der übersetzten Signale 300 ist. Die Auswerteeinheit 280 kann aufgrund der Periodenumsetzung durch die Periodenumsetzungseinrichtung 250 eine Auswertung bezüglich Signalen durchführen, die bezüglich einer mechanischen Periode definiert sind, die an die Auswertung und an die Übertragung angepasst ist, wodurch eine optimale Auswertung erzielt wird.

Es wird darauf hingewiesen, dass ein Wechsel des Positionssensors 200 bzw. das Ersetzen desselben durch einen anderen mit einer anderen mechanischen Periode problemlos möglich ist, da die Periodenumsetzungseinrichtung 250 die Periode der Sensorsignale Usin und Ucos wieder in Signale umwandeln kann, die eine Periode aufweisen, die von der elektrisch optimalen Periode abhängt.

Bezugnehmend auf Fig. 9 wird im folgenden ein spezielles Ausführungsbeispiel für die Periodenumsetzungseinrichtung 250 von Fig. 8 für den Fall beschrieben, dass die mechanische Periode des Positionssensors größer als die elektrisch optimale Periode ist, und daß die Periode der Sensorsignale in eine Periode umgesetzt werden soll, die einer mechanischen Periode entspricht, die $2^{-N}$ mit ganzzahligem N größer 0 der mechanischen Periode des Positionssensors beträgt. Es wird darauf hingewiesen, dass diejenigen Elemente von Fig. 9 die zu Elementen in Fig. 8 identisch sind, mit denselben Bezugszeichen versehen werden, und dass eine wiederholte Beschreibung dieser Elemente weggelassen wird.

Die in Fig. 9 gezeigte Periodenumsetzungseinrichtung, die in Fig. 9 allgemein mit 250' angezeigt ist, besteht aus einem analogen Signalaufbereitungsmodul 310, einem Analog/Digital-Wandler 320, einem digitalen Signalaufbereitungsmodul 330, einem Periodenumrechnungsmodul 340, einem Digital-AnalogWandler 350 und einer Endstufe, die aus zwei Leistungstreibern 360a und 360b besteht. Das Aufbereitungsmodul 310 ist über die Leitungen 240a-240d mit dem Positionssensor 200 verbunden und führt eine Vorverstärkung, Signalfilterung und Aufbereitung der differentiell eingespeisten Sensorsignale Usin und Ucos durch, um dieselben auf den zum Umsetzen in ein digitales Signal benötigten Pegel zu bringen und durch beispielsweise einen Tiefpassfilter von hochfrequentem Rauschen zu befreien. Das Aufbereitungsmodul 310 ist über Leitungen 370a, 370b, 370c und 370d mit dem Analog/Digital-Wandler 320 verbunden, um die Sensorsignale in aufbereiteter Form als Signal Usinv und Ucosv differentiell an den Analog/Digital-Wandler 320 auszugeben.

Der Analog/Digital-Wandler 320 setzt die analogen Signale Usinv und Ucosv in geeigneter Weise in ein digitales Signal $D_A$ um, das dasselbe über eine Leitung 380 an das digitale Signalaufbereitungsmodul 330 ausgibt. Die Analog/ Digital-Umsetzung durch den Analog/Digital-Wandler 320 umfasst beispielsweise die Berechnung der Arkustangensfunktion bezüglich der Signale Usinv und Ucosv, wobei ein Beispiel für einen geeigneten Analog/Digital-Wandler in der Patentanmeldung DE10052152 offenbart ist, deren Anmelderin die Anmelderin der vorliegenden Anmeldung ist, und die hiermit unter Bezugnahme aufgenommen wird. Das digitale Signal $D_A$ gibt die durch den Positionssensor 200 erfasste Position in Bezug auf einen momentanen Periodenabschnitt 220a bzw. 220b mit einer bestimmten Auflösung bzw. einer bestimmten Anzahl von gültigen Bits an. Die Auflösung kann beispielsweise 8 Bit betragen, so dass innerhalb eines Periodenabschnitts der Länge $l_{PER}$ 256 = $2^8$ Positionen codiert werden können. Anders ausgedrückt stellt das digitale Signal $D_A$ eine absolute Position in Bezug auf den momentanen Periodenabschnitt in digitaler Form dar.

Das Signalaufbereitungsmodul 330 führt beispielsweise eine zeitliche Tiefpassfilterung des digitalen Signals $D_A$ oder eine sonstige Aufbereitung desselben durch, und gibt dasselbe in aufbereiteter Form als digitales Signal $D_B$ auf einer Leitung 390 an das Periodenumrechnungsmodul 340 aus.

Das Periodenumrechnungsmodul 340 ist bei dem Ausführungsbeispiel von Fig. 9 zu Periodenumsetzungen geeignet, bei denen die mechanische Periode $l_{PER}$ durch eine Potenz von 2 geteilt wird, d.h. $l_{PER} \rightarrow l_{PER}/2^N$, wobei N eine Ganzzahl größer gleich 1 ist. Das Periodenumrechnungsmodul 340 blendet hierzu beispielsweise die N höchstwertigen Bits des digitalen Werts $D_B$ aus. Der so erhaltene Wert $D_C$ gibt die Position auf dem Maßstab bezüglich eines momentanen Periodenabschnitts eines Maßstabs an, der eine $2^N$-fache Auflösung relativ zu dem Maßstab 200 aufweist, wie es bezugnehmend auf Fig. 10 näher erläutert werden wird.

Nach der Periodenumrechnung gibt das Periodenumrechnungsmodul 340 das digitale Ausgangssignal $D_C$ 400 an den Digital/Analog-Wandler 350 aus, der aus dem digitalen Signal $D_C$ wieder analoge Sensorsignale SinOut und CosOut erzeugt, wie sie durch einen Positionssensor erzeugt werden würden, der einen Maßstab mit einer mechanischen Periode aufweist, die $l_{PER}/2^N$ beträgt. Die durch den Wandler 350 erzeugten Signale SinOut und CosOut, die bei 300 dargestellt sind, sind wie auch die Sensorsignale Usin uns Ucos periodische Signale, weisen jedoch eine um $2^N$ kleinere Periode auf.

Der Digital/Analog-Wandler 350 gibt die erzeugten Sensorsignale SinOut und CosOut über Leitungen 410a, 410b, 410c und 410d an die Leistungstreiber 360a und 360b aus, die dieselben verstärken und über die Übertragungsleitungen 270a, 270b, 270c und 270d an die Auswerteeinheit 280 ausgeben. Die Verstärkung kann an die Übertragungsgegebenheiten angepasst sein, um die Übertragung weiter zu optimieren.

In der Auswerteeinheit 280 können die Signale CosOut und SinOut zur analogen oder nach einer Digitalisierung zu einer digitalen Lagebestimmung verwendet werden.

Folglich kann mittels der Periodenumsetzungseinrichtung 250 von Fig. 9 eine mechanische Periode des Positionssensors 200 in Stufen von Potenzen von 2 an die elektrisch optimale Periode angepasst werden, die von den Übertragungsgegebenheiten und der Auswerteeinheit 280 abhängt.

Um die Funktionsweise des Periodenumrechnungsmoduls 340 von Fig. 9 zu veranschaulichen, sind in Fig. 10 der zeitliche Verlauf des digitalen Signals $D_B$, d.h. des Eingangssignals des Periodenumrechnungsmoduls 340, und des digitalen Signals $D_C$, d.h. des Ausgangssignals des Periodenumrechnungsmoduls 340, für ein Beispiel dargestellt, bei dem die mechanische Periode des Maßstabs des Positionssensors durch 4 = $2^2$ geteilt wird. Wie es zu sehen ist, besteht zwischen den Maßstäben 500 und 510 kein Versatz.

In Fig. 10 sind untereinander der Maßstab 500 des Positionssensors mit der mechanischen Periode $l_{PER}$ und ein Maßstab 510 mit einer viermal kleineren Einteilung dargestellt, wie er durch das Umsetzungsverhältnis, d.h. 4, festgelegt wird. Jeweils darunter zeigen zwei Graphen exemplarische Zeitverläufe der digitalen Signale $D_B$ und $D_C$ sowie der tatsächlichen Verschiebung zwischen Messstab und Positionssensor, wobei entlang der x-Achse die tatsächliche Verschiebung s bzw. die digitalen Einheiten von $D_B$ bzw. $D_C$ aufgetragen sind, während entlang der y-Achse die Zeit t aufgetragen ist.

Der Graph 520 zeigt bei einer Linie 535 eine exemplarische relative Verschiebung des Maßstabs zu dem Positionssensor, wie sie sich beispielsweise bei einem Anfahrvorgang ergibt. Mit Kreuzchen sind die abgetasteten digitalen Werte des digitalen Signals $D_B$ dargestellt, die von 1 bis 17 nummeriert sind, und deren zeitlicher Abtastabstand von der Analog/Digital-Umsetzung abhängt und in dem vorliegenden Fall exemplarisch eine halbe Millisekunde beträgt.

Wie es im vorhergehenden erwähnt wurde, weisen die Sensorsignale des Positionssensors lediglich innerhalb einer mechanischen Periode $l_{PER}$ einen eindeutigen Zusammenhang zu der erfassten Position auf, und dementsprechend codieren die möglichen Zustände des digitalen Signals $D_B$ lediglich eine Länge von $l_{PER}$. In dem vorliegenden Fall beträgt die Auflösung beispielsweise 8 Bit, wobei der Wert von 11111111 der Position innerhalb des momentanen Periodenabschnitts entspricht, die 255/265 $l_{PER}$ von dem Anfang des momentanen Periodenabschnitts entfernt ist. Obwohl folglich die Linearverschiebung s bei ca. 8 Millisekunden von einem Periodenabschnitt 540 zu einem nächsten Periodenabschnitt 550 wechselt, springt das digitale Signal $D_B$ lediglich von einem hohen Wert 16 zu einem niedrigen Wert 17. Anders ausgedrückt gibt der digitale Wert $D_B$ jeweils eine bezüglich eines Referenzpunktes 555 gemessene Position auf dem Maßstab modulo $l_{PER}$ an.

In dem Graphen 530 sind die digitalen Werte von $D_C$ gezeigt, die ebenfalls von 1 bis 17 nummeriert sind. Wie es zu ersehen ist, codieren die möglichen Zustände des Signals $D_C$ lediglich einen Bereich der Länge $l_{PER}/4$. Um dies zu erzielen, blendet das Periodenumrechnungsmodul 340 die zwei höchstwertigen Bits des digitalen Signals $D_B$ aus, so daß die digitalen Werte $D_C$ lediglich eine 6-Bit Auflösung aufweisen. Das Ausblenden der zwei höchstwertigen Bits der digitalen Wert $D_B$ entspricht dem Rest der digitalen Werte $D_B$ modulo $2^6$. Hierdurch wird erzielt, daß jeder digitale Wert $D_C$ die Position auf dem Maßstab in Bezug auf den momentanen Periodenabschnitt des Maßstabs 510 bzw. als Abstand von dem Anfang desselben angibt. Während der digitale Wert $D_B$ bzw. das Kreuzchen 10 beispielsweise einen Wert zwischen $2*2^6$ und $3*2^6$ aufweist und in Bezug auf den momentanen Periodenabschnitt 540 definiert ist, weist der digitale Wert $D_C$ bzw. das Kreuzchen 10 einen Wert zwischen 0 und $2^6$ auf und ist in Bezug auf den momentanen Periodenabschnitt 560 definiert.

Bezug nehmend auf Fig. 10 wird darauf hingewiesen, dass die Periode der ursprünglichen Sensorsignale Usin und Ucos ebenso wie das digitale Signal $D_B$ eine in dem vorliegenden Fall viermal größere Periode aufweisen als die Periode der erzeugten Sensorsignale SinOut und CosOut bzw. des digitalen Signals $D_C$. Der Grund hierfür besteht darin, dass die Letzteren in Bezug auf eine viermal kleinere mechanische Periode definiert sind, und dass folglich bei Durchfahren einer gleichen Verschiebungslänge s mehr Perioden durchlaufen werden. Während in Fig. 10 beispielsweise bis zur Zeit t = 8 ms lediglich eine mechanische Periode $l_{PER}$ durchlaufen wird, werden in der selben Zeit vier mechanische Perioden $l_{PER}/4$ durchlaufen. Die kleinere Periode der Signale CosOut und SinOut kann beispielsweise in Hinblick auf die Auswertung vorteilhaft sein, da sie bei gleicher Genauigkeit eine ungenauere Berechnung des Verhältnisses der beiden Signale erfordert.

Fig. 11 stellt ein Ausführungsbeispiel einer Periodenumsetzungseinrichtung 250" dar, die sich von derjenigen von Fig. 9 lediglich dadurch unterscheidet, dass sie ebenfalls zu Periodenumsetzungen fähig ist, bei denen die mechanische Periode, in Bezug auf welche die erzeugten Sensorsignale SinOut und CosOut definiert sein sollen, größer als die mechanische Periode des Positionssensors sind. Bei dem vorliegenden Ausführungsbeispiel ist die Periodenumsetzungseinrichtung 250" dazu in der Lage, die Periode der Sensorsignale des Positionssensors in Signale mit einer Periode zu übersetzen, die einer mechanischen Periode entspricht, die jeden Wert annehmen kann, der ein kleinstes gemeinsames Vielfaches mit der mechanischen Periode des Positionssensors aufweist. Bei der folgenden Beschreibung von Fig. 11 werden Elemente, die zu denjenigen von Fig. 9 identisch sind, mit denselben Bezugszeichen versehen, und eine wiederholte Beschreibung dieser Elemente wird weggelassen.

Die Periodenumsetzungseinrichtung 250" von Fig. 11 unterscheidet sich von derjenigen von Fig. 9 lediglich dadurch, dass eine Periodenabschnittswechselüberwachungseinrichtung 600 über eine Leitung 605 und eine Leitung 610 zwischen das Aufbereitungsmodul 330 und das Periodenumrechnungsmodul 340 geschaltet ist, und daß der digitale Wert $D_B$, der die absolute Position in Bezug auf einen momentanen Periodenabschnitt des Maßstabs 220 des Positionssensors 200 entspricht, durch die Periodenabschnittswechselüberwachungseinrichtung 600 in einen digitalen Wert umgewandelt wird, der die Position in Bezug auf einen aus mehreren Periodenabschnitten des Maßstabs 220 bestehenden Abschnitt des Maßstabs 220 angibt. Falls beispielsweise eine mechanische Periode von a/b $l_{PER}$ simuliert werden soll, wobei $a*L_{PER}$ dem kleinsten gemeinsamen Vielfachen entspricht, so wird aus $D_B$ die Position in Bezug auf a aufeinanderfolgende Periodeabschnitte bestimmt.

Um dies zu erzielen empfängt die Periodenabschnittswechselüberwachungseinrichtung 600 $D_B$ über eine Leitung 605 von dem Aufbereitungsmodul 330 und überwacht die Wert $D_B$ dahingehend, dem wievielten Periodenabschnitt der a aufeinanderfolgenden Periodenabschnitte der momentane Periodenabschnitt entspricht, in Bezug auf welchen $D_B$ die Position angibt. Die Einrichtung 600 kann beispielsweise einen digitalen Zähler umfassen, der in dem Fall, dass das digitale Signal $D_B$ den aufgrund der digitalen Auflösung beschränkten darstellbaren Bereich nach oben oder nach unten verlässt, einen Zählerwert inkrementieren bzw. dekrementieren und dabei das Modul a bilden. Soll beispielsweise eine mechanische Periode aus der Sicht der Auswerteeinheit simuliert werden, die doppelt so groß wie die mechanische Periode $I_{PER}$ des Positionssensors 200 ist, so genügt ein Zählerwert mit einem Bit. Die Überwachungseinrichtung 600 ergänzt den digitalen Wert $D_B$ um den Zählerwert auf der höherwertigen Seite, und gibt das Ergebnis als digitales Signal $D_{Ges}$ über eine Leitung 610 an das Periodenumrechnungsmodul 340 aus.

Das digitale Signal $D_{Ges}$ stellt folglich eine absolute Position in Bezug auf einen Abschnitt des Maßstabes dar, der aus mehreren Periodenabschnitten besteht. Das Periodenumrechnungsmodul 340 unterteilt diesen Bereich beispielsweise wie in Fig. 9 durch Ausblenden der niederwertigen Bits oder aber durch eine normale Division in b Teile. Auf diese Weise könnte allgemein eine mechanische Periode von a/b und beispielsweise insbesondere eine mechanische Periode von 3/8 * $I_{PER}$ simuliert werden, indem die Periodenabschnittswechselüberwachung 600 bei Über- bzw. Unterlauf des digitalen Werts $D_B$ den Zählerwert entsprechend inkrementiert bzw. dekrementiert und dabei ein Modul von 3 berücksichtigt und den Zählerwert an den digitalen Wert $D_B$ anhängt, um $D_{Ges}$ zu erhalten, und das Periodenumrechnungsmodul 340 von dem digitalen Signal $D_{Ges}$, das sich auf eine absolute Position in Bezug auf drei zusammenhängende Periodenabschnitte der Länge $I_{PER}$ bezieht, die drei höchstwertigen Bits entfernt.

Die vorhergehende Beschreibung ermöglicht folglich ein Auswertesystem für Sensorsignale, das vorzugsweise in der Nähe des Sensors angeordnet wird, das die Sensorsignale auswertet und mit wählbarer Amplitude und Periode ausgibt. Dadurch wird die am Sensor optimale Periode und der am Sensor vorhandene Signalpegel übersetzt in die optimale Periode und den optimalen Pegel für die Übertragung zur Maschinensteuerung und für die Maschinensteuerung und für die Signalauswertung der Maschinensteuerung.

Sensoren, die bisher aufgrund ihrer ungünstigen Signale bzw. ihrer ungünstigen Signalperiode nicht in Verbindung mit vorhandenen Steuerungen eingesetzt werden konnten, können durch die beschriebene Vorbereitung bzw. Periodenumsetzung adaptiert werden. Gleichzeitig zur Änderung der Periode kann auch eine Filterung und damit eine Aufbereitung der Signale geschehen, wodurch ein Sensor in verschiedene Steuerungen oder mehrere verschiedene Sensoren in dieselbe Steuerung passen.

Es wird darauf hingewiesen, dass, obwohl sich die vorhergehende Beschreibung auf einen Positionssensor für lineare Bewegungen bezog, die vorliegende Erfindung auch auf andere Positionssensoren anwendbar ist, wie z.B. Drehdifferentialtransformatoren. Zudem ist die vorliegende Erfindung nicht nur auf magnetische Sensoren sondern ferner auch auf optische oder mechanische Sensoren anwendbar. In dem Fall eines optischen Sensors kann der Maßstab beispielsweise eine Grauskalierung mit sinusförmigem Graustufenverlauf aufweisen. Folglich sind als Positionssensoren jegliche magnetische, optische oder mechanische Drehwinkel- oder Längsverschiebungsgeber denkbar. Dementsprechend ist die vorliegende Erfindung ohne weiteres auch auf Sensoren anwendbar, die lediglich ein Signal ausgeben, und nicht nur auf solche die zueinander in Quadratur stehende Signale ausgeben. Die im vorhergehenden erwähnte differentielle Einspeisung der Sensorsignale in die Periodenumsetzungseinrichtung kann ebenfalls alternativ durch eine andere Einspeisungsart ersetzt werden.

In Bezug auf das Umsetzungsverhältnis bezüglich der mechanischen Periode des Positionssensors und der mechanischen Periode, in Bezug auf welche das übersetzte Signal definiert sein soll, beziehungsweise das Übersetzungsverhältnis der Sensorsignalperiode und der Periode des übersetzten Signals wird darauf hingewiesen, dass allgemein auch Verhältnisse einstellbar sind, bei denen die mechanische Periode des Positionssensors und diejenige, auf welche sich das übersetzte Signal bezieht, kein gemeinsames Vielfaches aufweisen. In diesem Fall müsste die Periodenabschnittswechselüberwachungseinrichtung aus dem in Bezug auf die mechanische Periode absoluten Positionswert einen Positionswert erzeugen, der absolut in Bezug auf einen Bezugspunkt des Maßstabes des Positionssensors ist. Zudem sind bei dem Periodenumrechnungsmodul der Fig. 9 und 11 ebenfalls andere Teilerverhältnisse möglich als Potenz von 2, indem ein Dividierer verwendet wird, der den digitalen Wert $D_B$ durch eine ganze Zahl teilt. Insbesondere ist es möglich, eine Periodenumsetzung der Sensorsignalperiode, die von der mechanischen Periode des Positionssensors abhängt, auf eine Periode zu erzielen, die einer mechanischen Periode entspricht, die 1/K im Fall von Fig. 9 und x/K im Fall von Fig. 11 ($x \in |N$) der Sensorperiode beträgt, indem das Periodenumrechnungsmodul 340 von Fig. 9 bzw. 11 zu einem derartigen Rechenwerk modifiziert wird, dass dasselbe aus dem digitalen Wert $D_B$ bzw. $D_{Ges}$ den digitalen Wert $D_C$ zu dem K multiplizierten Rest der Division des digitalen absoluten Positionswertes $D_B$ durch K, d.h. zu $D_C = K \cdot (D_B \bmod K)$ bzw. $D_C = K \cdot (D_{Ges} \bmod K)$, berechnet.

Zudem können verschiedene Module und Einrichtungen der Fig. 9 und 11 auch fehlen, wie z.B. die Aufbereitungsmodule. Bei einer ganzzahligen Vervielfachung der Sensorsignalperiode kann beispielsweise das Periodenumrechungsmodul fehlen und stattdessen nur das Periodenabschnittswechselüberwachungsmodul verwendet werden. Die Leistungstreiber an der Ausgangstufe können ebenfalls fehlen.

**Patentansprüche**

1. Verfahren zum Vorbereiten eines analogen Sensorsignals eines Positionssensors (200), der einen Maßstab (220) mit einer ersten mechanischen Periode aufweist, für eine Ausgabe zu einer Auswerteeinheit (280), wobei das analoge Sensorsignal eine erste Periode aufweist, die von der ersten mechanischen Periode abhängt, mit folgenden Schritten:

   Empfangen des analogen Sensorsignals von dem Positionssensor (280);
   Übersetzen des analogen Sensorsignals in ein übersetztes analoges Signal, wobei das übersetzte analoge Signal eine zweite Periode aufweist, die einer zweiten mechanischen Periode entspricht; und
   Ausgeben des übersetzten analogen Signals zu der Auswerteeinheit (280),
   wobei das analoge Sensorsignal eine Position auf dem Maßstab (220) in Bezug auf einen ersten momentanen Periodenabschnitt, in dem die Position enthalten ist, einer Folge von Periodenabschnitten (220a, 220b; 540, 550) anzeigt, aus denen der Maßstab (220) des Positionssensors (200) besteht, und das übersetzte analoge Signal die Position auf dem Maßstab (220) in Bezug auf einen zweiten momentanen Periodenabschnitt (560), in dem die Position enthalten ist, einer zweiten Folge von Periodenabschnitten anzeigt, die durch die zweite mechanische Periode festgelegt sind, und wobei der Schritt des Übersetzens des analogen Sensorsignals folgende Teilschritte aufweist:

   Bestimmen eines digitalen absoluten Positionswerts (320; 600), der die Position auf dem Maßstab (220) in Bezug auf einen Abschnitt des Maßstabs festlegt, der zumindest den ersten momentanen Periodenabschnitt (540) und den zweiten momentanen Periodenabschnitt (560) umfasst, aus dem analogen Sensorsignal; und
   Erzeugen des übersetzten analogen Signals aus dem digitalen absoluten Positionswert, und
   wobei der Abschnitt des Maßstabs (220), in Bezug auf welchen der digitale absolute Positionswert die Position auf dem Maßstab festlegt, einer Anzahl von Periodenabschnitten der zweiten Folge von Periodenabschnitten entspricht, wobei die Anzahl gleich k ist, wobei k eine Ganzzahl ist, und bei der der digitale absolute Positionswert ein digitaler Wert mit einer Mehrzahl von Bits ist, und der Schritt zum Erzeugen des übersetzten analogen Signals folgende Schritte aufweist:

   Berechnung des mit k multiplizierten Rests der Division des digitalen absoluten Positionswertes durch k, um einen berechneten digitalen Wert\zu erhalten; und
   Umwandeln des berechneten digitalen Werts in das übersetzt analoge Signal.

2. Verfahren zum Vorbereiten eines analogen Sensorsignals eines Positionssensors (200), der einen Maßstab (220) mit einer ersten mechanischen Periode aufweist, für eine Ausgabe zu einer Auswerteeinheit (280), wobei das analoge Sensorsignal eine erste Periode aufweist, die von der ersten mechanischen Periode abhängt, mit folgenden Schritten:

   Empfangen des analogen Sensorsignals von dem Positionssensor (280);
   Übersetzen des analogen Sensorsignals in ein übersetztes analoges Signal, wobei das übersetzte analoge Signal eine zweite Periode aufweist, die einer zweiten mechanischen Periode entspricht; und
   Ausgeben des übersetzten analogen Signals zu der Auswerteeinheit (280),
   wobei das analoge Sensorsignal eine Position auf dem Maßstab (220) in Bezug auf einen ersten momentanen Periodenabschnitt, in dem die Position enthalten ist, einer Folge von Periodenabschnitten (220a, 220b; 540, 550) anzeigt, aus denen der Maßstab (220) des Positionssensors (200) besteht, und das übersetzte analoge Signal die Position auf dem Maßstab (220) in Bezug auf einen zweiten momentanen Periodenabschnitt (560), in dem die Position enthalten ist, einer zweiten Folge von Periodenabschnitten anzeigt, die durch die zweite mechanische Periode festgelegt sind, und wobei der Schritt des Übersetzens des analogen Sensorsignals folgende Teilschritte aufweist:

   Bestimmen eines digitalen absoluten Positionswerts (320; 600), der die Position auf dem Maßstab (220) in Bezug auf einen Abschnitt des Maßstabs festlegt, der zumindest den ersten momentanen Periodenabschnitt (540) und den zweiten momentanen Periodenabschnitt (560) umfasst, aus dem analogen Sensorsignal; und
   Erzeugen des übersetzten analogen Signals aus dem digitalen absoluten Positionswert, und
   wobei der Abschnitt des Maßstabs (220), in Bezug auf welchen der digitale absolute Positionswert die Position auf dem Maßstab festlegt, einer Anzahl von Periodenabschnitten der zweiten Folge von Periodenabschnitten entspricht, wobei die Anzahl gleich $2^x$ ist, wobei x eine Ganzzahl ist, und bei der der digitale absolute Positionswert ein digitaler Wert mit einer Mehrzahl von Bits ist, und der Schritt zum Erzeugen des übersetzten analogen Signals folgende Schritte aufweist:

Ausblenden der x höchstwertigen Bits des digitalen absoluten Positionswerts; und
Umwandeln des nicht-ausgeblendeten Teils des digitalen absoluten Positionswertes in das übersetzte analoge Signal.

3. Vorrichtung zum Vorbereiten eines analogen Sensorsignals eines Positionssensors (280), der einen Maßstab (220) mit einer ersten mechanischen Periode aufweist, für eine Ausgabe zu einer Auswerteeinheit (280), wobei das analoge Sensorsignal eine erste Periode aufweist, die von der ersten mechanischen Periode abhängt, mit folgenden Merkmalen:

einem Eingang zum Empfangen des analogen Sensorsignals von dem Positionssensor (280);
einer Einrichtung (250; 250'; 250") zum Übersetzen des analogen Sensorsignals in ein übersetztes analoges Signal, wobei das übersetzte analoge Signal eine zweite Periode aufweist, die einer zweiten mechanischen Periode entspricht; und
einem Ausgang zum Ausgeben des übersetzten analogen Signals zu der Auswerteeinheit (280),
wobei das analoge Sensorsignal eine Position auf dem Maßstab (220) in Bezug auf einen ersten momentanen Periodenabschnitt, in dem die Position enthalten ist, einer Folge von Periodenabschnitten (220a, 220b; 540, 550) anzeigt, aus denen der Maßstab (220) des Positionssensors (200) besteht, und das übersetzte analoge Signal die Position auf dem Maßstab (220) in Bezug auf einen zweiten momentanen Periodenabschnitt (560), in dem die Position enthalten ist, einer zweiten Folge von Periodenabschnitten anzeigt, die durch die zweite mechanische Periode festgelegt sind, und bei der die Einrichtung zum Übersetzen des analogen Sensorsignals folgende Merkmale aufweist:

eine Einrichtung (320; 600) zum Bestimmen eines digitalen absoluten Positionswerts, der die Position auf dem Maßstab (220) in Bezug auf einen Abschnitt des Maßstabs festlegt, der zumindest den ersten momentanen Periodenabschnitt (540) und den zweiten momentanen Periodenabschnitt (560) umfasst, aus dem analogen Sensorsignal; und
eine Einrichtung (340) zum Erzeugen des übersetzten analogen Signals aus dem digitalen absoluten Positionswert, und
wobei der Abschnitt des Maßstabs (220), in Bezug auf welchen der digitale absolute Positionswert die Position auf dem Maßstab festlegt, einer Anzahl von Periodenabschnitten der zweiten Folge von Periodenabschnitten entspricht, wobei die Anzahl gleich k ist, wobei k eine Ganzzahl ist, und bei der der digitale absolute Positionswert ein digitaler Wert mit einer Mehrzahl von Bits ist, und die Einrichtung (340) zum Erzeugen des übersetzten analogen Signals folgende Merkmale aufweist:

eine Einrichtung (340) zur Berechnung des mit k multiplizierten Rests der Division des digitalen absoluten Positionswertes durch k, um einen berechneten digitalen Positionswert zu erhalten; und
einen Digital/Analog-Wandler zum Umwandeln des berechneten digitalen Positionswertes in das übersetzte analoga Signal.

4. Vorrichtung zum Vorbereiten eines analogen Sensorsignals eines Positionssensors (280), der einen Maßstab (220) mit einer ersten mechanischen Periode aufweist, für eine Ausgabe zu einer Auswerteeinheit (280), wobei das analoge Sensorsignal eine erste Periode aufweist, die von der ersten mechanischen Periode abhängt, mit folgenden Merkmalen:

einem Eingang zum Empfangen des analogen Sensorsignals von dem Positionssensor (280);
einer Einrichtung (250; 250'; 250") zum Übersetzen des analogen Sensorsignals in ein übersetztes analoges Signal, wobei das übersetzte analoge Signal eine zweite Periode aufweist, die einer zweiten mechanischen Periode entspricht; und
einem Ausgang zum Ausgeben des übersetzten analogen Signals zu der Auswerteeinheit (280),
wobei das analoge Sensorsignal eine Position auf dem Maßstab (220) in Bezug auf einen ersten momentanen Periodenabschnitt, in dem die Position enthalten ist, einer Folge von Periodenabschnitten (220a, 220b; 540, 550) anzeigt, aus denen der Maßstab (220) des Positionssensors (200) besteht, und das übersetzte analoge Signal die Position auf dem Maßstab (220) in Bezug auf einen zweiten momentanen Periodenabschnitt (560), in dem die Position enthalten ist, einer zweiten Folge von Periodenabschnitten anzeigt, die durch die zweite mechanische Periode festgelegt sind, und bei der die Einrichtung zum Übersetzen des analogen Sensorsignals folgende Merkmale aufweist:

eine Einrichtung (320; 600) zum Bestimmen eines digitalen absoluten Positionswerts, der die Position auf dem Maßstab (220) in Bezug auf einen Abschnitt des Maßstabs festlegt, der zumindest den ersten momentanen Periodenabschnitt (540) und den zweiten momentanen Periodenabschnitt (560) umfasst, aus dem analogen Sensorsignal; und

eine Einrichtung (340) zum Erzeugen des übersetzten analogen Signals aus dem digitalen absoluten Positionswert, und

wobei der Abschnitt des Maßstabs (220), in Bezug auf welchen der digitale absolute Positionswert die Position auf dem Maßstab festlegt, einer Anzahl von Periodenabschnitten der zweiten Folge von Periodenabschnitten entspricht, wobei die Anzahl gleich $2^x$ ist, wobei x eine Ganzzahl ist, und bei der der digitale absolute Positionswert ein digitaler Wert mit einer Mehrzahl von Bits ist, und die Einrichtung (340) zum Erzeugen des übersetzten analogen Signals folgende Merkmale aufweist:

eine Einrichtung (340) zum Ausblenden der x höchstwertigen Bits des digitalen absoluten Positionswerts; und

einen Digital/Analog-Wandler zum Umwandeln des nicht-ausgeblendeten Teils des digitalen absoluten Positionswertes in das übersetzte analoge Signal.

5. Vorrichtung gemäß Anspruch 3 oder 4, bei der die erste mechanische Periode und die zweite mechanische Periode ein kleinstes gemeinsames Vielfaches aufweisen, und der Abschnitt des Maßstabs (220), in Bezug auf welchen der absolute Positionswert die Position auf dem Maßstab (220) festlegt, einer ersten Anzahl von aneinandergrenzenden Periodenabschnitten der ersten Folge von Periodenabschnitten und einer zweiten Anzahl von äneinandergrenzenden Periodenabschnitten der zweiten Folge von Periodenabschnitten entspricht, und bei der die Einrichtung (320; 600) zum Bestimmen des digitalen absoluten Positionswerts folgende Merkmale aufweist:

eine Einrichtung (600) zum Überwachen des analogen Sensorsignals dahingehend, dem wievielten Periodenabschnitt der ersten Anzahl von aneinandergrenzenden Periodenabschnitten innerhalb des Abschnitts des Maßstabs (220) der erste momentane Periodenabschnitt entspricht, in Bezug auf welchen das analoge Sensorsignal die Position auf dem Maßstab (220) angibt; und

eine Einrichtung (600) zum Berechnen des digitalen absoluten Positionswerts basierend auf dem Ergebnis der Überwachung und dem analogen Sensorsignal.

6. Vorrichtung gemäß einem der Ansprüche 3-5, bei der die erste mechanische Periode ein ganzzahliges Vielfaches der zweiten mechanischen Periode beträgt, und der Abschnitt des Maßstabs (220), in Bezug auf welchen der absolute Positionswert die Position auf dem Maßstab festgelegt, dem ersten momentanen Periodenabschnitt entspricht.

7. Vorrichtung gemäß einem der Ansprüche 3-6, bei der die Einrichtung (320; 600) zum Bestimmen der Position auf dem Maßstab in Bezug auf den Abschnitt des Maßstabs folgendes Merkmal aufweist:

einen Analog/Digital-Wandler (310) zum Umwandeln des analogen Sensorsignals in einen digitalen absoluten Positionswert.

8. Vorrichtung gemäß einem der Ansprüche 3 bis 7, bei der das analoge Sensorsignal zwei zueinander in Quadratur stehende analoge Teilsignale umfasst, die eine Position auf dem Maßstab lediglich in Bezug auf den momentanen Periodenabschnitt eindeutig angeben.

9. Vorrichtung gemäß einem der Ansprüche 3 bis 8, wobei die Vorrichtung über eine kurze Übertragungsstrecke (240a - 240d) mit dem Positionssensor (200) verbunden ist, so dass Übertragungsverluste des analogen Sensorsignals bis zu dem Eingang der Vorrichtung gering sind.

10. Vorrichtung gemäß einem der Ansprüche 3 bis 9, bei der die erste mechanische Periode angepasst ist, um bezüglich der Herstellung, Anbringung und Ablesbarkeit des Maßstabs optimiert zu sein, während die zweite mechanische Periode angepasst ist, um bezüglich einer Signalübertragung des übersetzten analogen Signals zu der Auswerteeinheit (280) und einer Auswertung des übersetzten analogen Signals durch die Auswerteeinheit (280) optimiert zu sein.

11. Vorrichtung gemäß einem der Ansprüche 3 bis 10, bei dem die zweite mechanische Periode einstellbar ist.

**Claims**

1. A method for preparing an analog sensor signal of a position sensor (200) having a scale (220) with a first mechanical period for output to an evaluation unit (280), the analog sensor signal having a first period which depends on the first mechanical period, comprising the following steps:

receiving the analog sensor signal from the position sensor (200);
translating the analog sensor signal into a translated analog signal, the translated analog signal having a second period corresponding to a second mechanical period; and
issuing the translated analog signal to the evaluation unit (280),
wherein the analog sensor signal indicates a position on the scale (220) relative to a first instantaneous period section, the one containing the position, of a sequence of period sections (220a, 220b; 540, 550) constituting the scale (220) of the position sensor (200), and the translated analog signal indicates the position on the scale (220) relative to a second instantaneous period section (560), the one containing the position, of a second sequence of period sections determined by the second mechanical period, and
wherein the step of translating the analog sensor signal comprises the following substeps:

determining from the analog sensor signal a digital absolute position value (320; 600) which determines the position on the scale (220) relative to a section of the scale comprising at least the first instantaneous period section (540) and the second instantaneous period section (560); and
generating the translated analog signal from the digital absolute position value, and
wherein the section of the scale (220) relative to which the digital absolute position value determines the position on the scale corresponds to a number of period sections of the second sequence of period sections, the number being equal to k, where k is a whole number, and the digital absolute position value is a digital value with a plurality of bits and the step of generating the translated analog signal comprises the following steps:

calculating the result of multiplying by k the remainder of the digital absolute position value divided by k to obtain a calculated digital value; and
converting the calculated digital value into the translated analog signal.

2. A method for preparing an analog sensor signal of a position sensor (200) having a scale (220) with a first mechanical period for output to an evaluation unit (280), the analog sensor signal having a first period which depends on the first mechanical period, comprising the following steps:

receiving the analog sensor signal from the position sensor (200);
translating the analog sensor signal into a translated analog signal, the translated analog signal having a second period corresponding to a second mechanical period; and
issuing the translated analog signal to the evaluation unit (280),
wherein the analog sensor signal indicates a position on the scale (220) relative to a first instantaneous period section, the one containing the position, of a sequence of period sections (220a, 220b; 540, 550) constituting the scale (220) of the position sensor (200), and the translated analog signal indicates the position on the scale (220) relative to a second instantaneous period section (560), the one containing the position, of a second sequence of period sections determined by the second mechanical period, and wherein the step of translating the analog sensor signal comprises the following substeps:

determining from the analog sensor signal a digital absolute position value (320; 600) which determines the position on the scale (220) relative to a section of the scale comprising at least the first instantaneous period section (540) and the second instantaneous period section (560); and
generating the translated analog signal from the digital absolute position value, and
wherein the section of the scale (220) relative to which the digital absolute position value determines the position on the scale corresponds to a number of period sections of the second sequence of period sections, the number being equal to $2^x$, where x is a whole number, and the digital absolute position value is a digital value with a plurality of bits and the step of generating the translated analog signal comprises the following steps:

blanking out the x most significant bits of the digital absolute position value; and
converting the unblanked-out part of the digital absolute position value into the translated analog signal.

3. A device for preparing an analog sensor signal of a position sensor (200) having a scale (220) with a first mechanical period for output to an evaluation unit (280), the analog sensor signal having a first period which depends on the first mechanical period, comprising:

an input for receiving the analog sensor signal from the position sensor (200);
a unit (250; 250'; 250") for translating the analog sensor signal into a translated analog signal, the translated analog signal having a second period corresponding to a second mechanical period; and
an output for issuing the translated analog signal to the evaluation unit (280),
wherein the analog sensor signal indicates a position on the scale (220) relative to a first instantaneous period section, the one containing the position, of a sequence of period sections (220a, 220b; 540, 550) constituting the scale (220) of the position sensor (200), and the translated analog signal indicates the position on the scale (220) relative to a second instantaneous period section (560), the one containing the position, of a second sequence of period sections determined by the second mechanical period, and wherein the unit for translating the analog sensor signal comprises:

a unit (320; 600) for determining from the analog sensor signal a digital absolute position value which determines the position on the scale (220) relative to a section of the scale comprising at least the first instantaneous period section (540) and the second instantaneous period section (560); and
a unit (340) for generating the translated analog signal from the digital absolute position value, and wherein the section of the scale (220) relative to which the digital absolute position value determines the position on the scale corresponds to a number of period sections of the second sequence of period sections, the number being equal to k, where k is a whole number, and the digital absolute position value is a digital value with a plurality of bits and the unit (340) for generating the translated analog signal comprises:

a unit (340) for calculating the result of multiplying by k the remainder of the digital absolute position value divided by k to obtain a calculated digital position value; and
a digital/analog converter for converting the calculated digital position value into the translated analog signal.

4. A device for preparing an analog sensor signal of a position sensor (200) having a scale (220) with a first mechanical period for output to an evaluation unit (280), the analog sensor signal having a first period which depends on the first mechanical period, comprising:

an input for receiving the analog sensor signal from the position sensor (200);
a unit (250; 250'; 250") for translating the analog sensor signal into a translated analog signal, the translated analog signal having a second period corresponding to a second mechanical period; and
an output for issuing the translated analog signal to the evaluation unit (280),
wherein the analog sensor signal indicates a position on the scale (220) relative to a first instantaneous period section, the one containing the position, of a sequence of period sections (220a, 220b; 540, 550) constituting the scale (220) of the position sensor (200), and the translated analog signal indicates the position on the scale (220) relative to a second instantaneous period section (560), the one containing the position, of a second sequence of period sections determined by the second mechanical period, and wherein the unit for translating the analog sensor signal comprises:

a unit (320; 600) for determining from the analog sensor signal a digital absolute position value which determines the position on the scale (220) relative to a section of the scale comprising at least the first instantaneous period section (540) and the second instantaneous period section (560); and
a unit (340) for generating the translated analog signal from the digital absolute position value, and wherein the section of the scale (220) relative to which the digital absolute position value determines the position on the scale corresponds to a number of period sections of the second sequence of period sections, the number being equal to $2^x$, where x is a whole number, and the digital absolute position value is a digital value with a plurality of bits and the unit (340) for generating the translated analog signal comprises:

a unit (340) for blanking out the x most significant bits of the digital absolute position value; and
a digital/analog converter for converting the unblanked-out part of the digital absolute position value into the translated analog signal.

**5.** A device according to claim 3 or 4, wherein the first mechanical period and the second mechanical period have a lowest common multiple and the section of the scale (220) relative to which the absolute position value determines the position on the scale (220) corresponds to a first number of contiguous period sections of the first sequence of period sections and to a second number of contiguous period sections of the second sequence of period sections, and wherein the unit (320; 600) for determining the digital absolute position value comprises:

a unit (600) for monitoring the analog sensor signal to establish to which of the period sections of the first number of contiguous period sections within the section of the scale (220) the first instantaneous period section corresponds relative to which the analog sensor signal indicates the position on the scale (220); and
a unit (600) for calculating the digital absolute position value on the basis of the result of the monitoring and the analog sensor signal.

**6.** A device according to one of the claims 3 to 5, wherein the first mechanical period is an integer multiple of the second mechanical period and the section of the scale (220) relative to which the absolute position value determines the position on the scale corresponds to the first instantaneous period section.

**7.** A device according to one of the claims 3 to 6, wherein the unit (320; 600) for determining the position on the scale relative to the section of the scale comprises:

an analog/digital converter (310) for converting the analog sensor signal into a digital absolute position value.

**8.** A device according to one of the claims 3 to 7, wherein the analog sensor signal comprises two analog subsignals in quadrature to each other which indicate a position on the scale which is only unambiguous relative to the instantaneous period section.

**9.** A device according to one of the claims 3 to 8, wherein the device is connected to the position sensor (200) via a short transmission path (240a - 240d), so that transmission losses of the analog sensor signal until it reaches the input of the device are small.

**10.** A device according to one of the claims 3 to 9, wherein the first mechanical period is adapted so as to be optimal as regards manufacture, attachment and readability of the scale and the second mechanical period is adapted so as to be optimal as regards signal transmission of the translated analog signal to the evaluation unit (280) and evaluation of the translated analog signal by the evaluation unit (280).

**11.** A device according to one of the claims 3 to 10, wherein the second mechanical period is adjustable.

**Revendications**

**1.** Procédé permettant de préparer un signal analogique d'un capteur de position (200) qui présente une échelle (220) avec une première période mécanique, en vue de sa sortie vers une unité d'évaluation (280), le signal de capteur analogique présentant une première période qui est fonction de la première période mécanique, aux étapes suivantes consistant à :

recevoir le signal analogique du capteur de position (280) ;
transformer le signal de capteur analogique en un signal analogique transformé, le signal analogique transformé présentant une deuxième période qui correspond à une deuxième période mécanique ; et
sortir le signal analogique transformé vers l'unité d'évaluation (280),
le signal de capteur analogique indiquant une position sur l'échelle (220) en ce qui concerne un premier segment de période momentané, dans lequel est contenue la position, d'une succession de segments de période (220a, 220b ; 540, 550) desquels se compose l'échelle (220) du capteur de position (200), et le signal analogique transformé indiquant la position sur l'échelle (220) en ce qui concerne un deuxième segment de période momentané (560), dans lequel est contenue la position, d'une deuxième succession de segments de période qui sont fixés par la deuxième période mécanique, et l'étape de conversion du signal de capteur analogique présentant les étapes partielles suivantes consistant à :

déterminer une valeur de position absolue numérique (320 ; 600) qui fixe la position sur l'échelle (220) en ce qui concerne un segment de l'échelle qui comprend au moins le premier segment de période momentané (540) et le deuxième segment de période momentané (560), à partir du signal de capteur analogique ; et générer le signal analogique transformé à partir de la valeur de position absolue numérique, et

le segment de l'échelle (220) en référence auquel la valeur de position absolue numérique fixe la position à l'échelle correspondant à un nombre de segments de période de la deuxième succession de segments de période, le nombre étant égal à k, k étant un nombre entier, et dans lequel la valeur de position absolue numérique est une valeur numérique avec une pluralité de bits, et l'étape de génération du signal analogique transformé présentant les étapes suivantes consistant à :

calculer le reste multiplié par k de la division de la valeur de position absolue numérique par k, pour obtenir une valeur numérique calculée ; et
convertir la valeur numérique calculée en signal analogique transformé.

**2.** Procédé permettant de préparer un signal analogique d'un capteur de position (200) qui présente une première échelle (220) avec une première période mécanique, en vue de sa sortie vers une unité d'évaluation (280), le signal de capteur analogique présentant une première période qui est fonction de la première période mécanique, aux étapes suivantes consistant à :

recevoir le signal de capteur analogique du capteur de position (280) ;
convertir le signal de capteur analogique en un signal analogique transformé, le signal analogique transformé présentant une deuxième période qui correspond à une deuxième période mécanique ; et
sortir le signal analogique transformé vers l'unité d'évaluation (280),
le signal de capteur analogique indiquant une position sur l'échelle (220) en ce qui concerne un premier segment de période momentané, dans lequel est contenue la position, d'une succession de segments de période (220a, 220b ; 540, 550) desquels se compose l'échelle (220) du capteur de position (200), et le signal analogique transformé indiquant la position sur l'échelle (220) en ce qui concerne un deuxième segment de période momentané (560), dans lequel est contenue la position, d'une deuxième succession de segments de période qui sont fixés par la deuxième période mécanique, et l'étape de conversion du signal de capteur analogique présentant les étapes partielles suivantes consistant à :

déterminer une valeur de position absolue numérique (320 ; 600) qui fixe la position sur l'échelle (220) en ce qui concerne un segment de l'échelle qui comprend au moins le premier segment de période momentané (540) et le deuxième segment de période momentané (560), à partir du signal de capteur analogique ; et générer le signal analogique transformé à partir de la valeur de position absolue numérique, et

le segment de l'échelle (220) en référence auquel la valeur de position absolue numérique fixe la position sur l'échelle correspond à un nombre de segments de période de la deuxième succession de segments de période, le nombre étant égal à $2^x$, x étant un nombre entier, et dans lequel la valeur de position absolue numérique est une valeur numérique avec une pluralité de bits, et l'étape de génération du signal analogique transformé présentant les étapes suivantes consistant à :

éliminer les x bits de valeur supérieure de la valeur de position absolue numérique ; et
convertir la partie non éliminée de la valeur de position absolue numérique en signal analogique transformé.

**3.** Dispositif permettant de préparer un signal analogique d'un capteur de position (280) qui présente une échelle (220) avec une première période mécanique, en vue de sa sortie vers une unité d'évaluation (280), le signal de capteur analogique présentant une première période qui est fonction de la première période mécanique, aux caractéristiques suivantes :

une entrée pour recevoir le signal analogique du capteur de position (280);
un dispositif (250 ; 250' ; 250") destiné à transformer le signal de capteur analogique en un signal analogique transformé, le signal analogique transformé présentant une deuxième période qui correspond à une deuxième période mécanique ; et
une sortie pour sortir le signal analogique transformé vers l'unité d'évaluation (280),
le signal de capteur analogique indiquant une position sur l'échelle (220) en ce qui concerne un premier segment de période momentané, dans lequel est contenue la position, d'une succession de segments de période (220a, 220b ; 540, 550) desquels se compose l'échelle (220) du capteur de position (200), et le signal analogique transformé indiquant la position sur l'échelle (220) en ce qui concerne un deuxième segment de période momentané (560), dans lequel est contenue la position, d'une deuxième succession de segments de période qui sont fixés par la deuxième période mécanique, et dans lequel le dispositif de conversion du signal de capteur analogique présentant les caractéristiques suivantes :

un dispositif (320 ; 600) destiné à déterminer une valeur de position absolue numérique qui fixe la position sur l'échelle (220) en ce qui concerne un segment de l'échelle qui comprend au moins le premier segment de période momentané (540) et le deuxième segment de période momentané (560), à partir du signal de capteur analogique ; et
un dispositif (340) destiné à générer le signal analogique transformé à partir de la valeur de position absolue numérique, et
le segment de l'échelle (220) en référence auquel la valeur de position absolue numérique fixe la position à l'échelle correspondant à un nombre de segments de période de la deuxième succession de segments de période, le nombre étant égal à k, k étant un nombre entier, et dans lequel la valeur de position absolue numérique est une valeur numérique avec une pluralité de bits, et le dispositif (340) de génération du signal analogique transformé présentant les caractéristiques suivantes :

un dispositif (340) destiné à calculer le reste multiplié par k de la division de la valeur de position absolue numérique par k, pour obtenir une valeur de position numérique calculée ; et
un convertisseur numérique/analogique destiné à convertir la valeur de position numérique calculée en signal analogique transformé.

**4.** Dispositif permettant de préparer un signal analogique d'un capteur de position (280) qui présente une échelle (220) avec une première période mécanique, en vue de sa sortie vers une unité d'évaluation (280), le signal de capteur analogique présentant une première période qui est fonction de la première période mécanique, aux caractéristiques suivantes :

une entrée pour recevoir le signal de capteur analogique du capteur de position (280) ;
un dispositif (250 ; 250' ; 250") destiné à convertir le signal de capteur analogique en un signal analogique transformé, le signal analogique transformé présentant une deuxième période qui correspond à une deuxième période mécanique ; et
une sortie pour sortir le signal analogique transformé vers l'unité d'évaluation (280),
le signal de capteur analogique indiquant une position sur l'échelle (220) en ce qui concerne un premier segment de période momentané, dans lequel est contenue la position, d'une succession de segments de période (220a, 220b ; 540, 550) desquels se compose l'échelle (220) du capteur de position (200), et le signal analogique transformé indiquant la position sur l'échelle (220) en ce qui concerne un deuxième segment de période momentané (560), dans lequel est contenue la position, d'une deuxième succession de segments de période qui sont fixés par la deuxième période mécanique, et dans lequel le dispositif de conversion du signal de capteur analogique présente les caractéristiques suivantes :

un dispositif (320 ; 600) destiné à déterminer une valeur de position absolue numérique qui fixe la position sur l'échelle (220) en ce qui concerne un segment de l'échelle qui comprend au moins le premier segment de période momentané (540) et le deuxième segment de période momentané (560), à partir du signal de capteur analogique ; et
un dispositif (340) destiné à générer le signal analogique transformé à partir de la valeur de position absolue numérique, et
le segment de l'échelle (220) en référence auquel la valeur de position absolue numérique fixe la position sur l'échelle correspond à un nombre de segments de période de la deuxième succession de segments de période, le nombre étant égal à $2^x$, x étant un nombre entier, et dans lequel la valeur de position absolue numérique est une valeur numérique avec une pluralité de bits, et le dispositif (340) de génération du signal analogique transformé présentant les caractéristiques suivantes :

un dispositif (340) destiné à éliminer les x bits de valeur supérieure de la valeur de position absolue numérique ; et
un convertisseur numérique/analogique destiné à convertir la partie non éliminée de la valeur de position absolue numérique en signal analogique transformé.

**5.** Dispositif selon la revendication 3 ou 4, dans lequel la première période mécanique et la deuxième période mécanique présentent un multiple commun le plus petit, et le segment de l'échelle (220) en référence auquel la valeur de position absolue fixe la position sur l'échelle (220) correspond à un premier nombre de segments de période adjacents de la première succession de segments de période et à un deuxième nombre de segments de période adjacents de la deuxième succession de segments de période, et dans lequel le dispositif (320 ; 600) destiné à déterminer la valeur de position absolue numérique présente les caractéristiques suivantes :

un dispositif (600) destiné à surveiller le signal de capteur pour savoir au quantième segment de période du premier nombre de segments de période adjacents dans le segment de l'échelle (220) correspond le premier segment de période momentané en référence auquel le signal de capteur analogique indique la position sur l'échelle (220) ; et
un dispositif (600) destiné à calculer la valeur de position absolue numérique sur base du résultat de la surveillance et du signal de capteur analogique.

6. Dispositif selon l'une des revendications 3 à 5, dans lequel la première période mécanique est un multiple de nombre entier de la deuxième période mécanique, et le segment de l'échelle (220) en référence auquel la valeur de position absolue fixe la position sur l'échelle correspond au premier segment de période momentané.

7. Dispositif selon l'une des revendications 3 à 6, dans lequel le dispositif (320; 600) destiné à déterminer la position sur l'échelle en ce qui concerne le segment de l'échelle présente la caractéristique suivante:

un convertisseur analogique/numérique (310) destiné à convertir le signal de capteur analogique en une valeur de position absolue numérique.

8. Dispositif selon l'une des revendications 3 à 7, dans lequel le signal de capteur analogique comporte deux signaux analogiques partiels en quadrature entre eux qui indiquent de manière univoque une position sur l'échelle uniquement en ce qui concerne le segment de période momentané.

9. Dispositif selon l'une des revendications 3 à 8, le dispositif étant relié sur un court trajet de transmission (240a à 240d) au capteur de position (200), de sorte que les pertes de transmission du signal de capteur analogique jusqu'à l'entrée du dispositif soient faibles.

10. Dispositif selon l'une des revendications 3 à 9, dans lequel la première période mécanique est adaptée pour être optimisée en ce qui concerne la production, le placement et l'aptitude à la lecture de l'échelle, tandis que la deuxième période mécanique est adaptée pour être optimisée en ce qui concerne une transmission du signal analogique transformé vers l'unité d'évaluation (280) et une évaluation du signal analogique transformé par l'unité d'évaluation (280).

11. Dispositif selon l'une des revendications 3 à 10, dans lequel la deuxième période mécanique est réglable.

Fig. 1a

Fig. 1b

Fig. 1c

Fig. 2

Fig. 5

Fig. 8

Fig. 3

EP 1 399 715 B1

Fig. 4

110   100   155b
            155a   150a   140a   140b              130

Usin   ∿∿∿   ▷   ∿∿∿                    Auswert-
Ucos   ∿∿∿   ▷   ∿∿∿                    Einheit

$l_{Per}$

120   155d   155c   150b   140c

140d

## Fig. 6

110   100                      160a              130
                                          170a

Usin   ∿∿                              digitale
Ucos   ∿∿      A / D    ▷                Auswert-
                            ▷           Einheit

$l_{Per}$

120                160    160b

170b

## Fig. 7

Fig. 9

FIG. 10

Fig. 11